# EUROPEAN PATENT APPLICATION

(11) **EP 4 671 460 A1**
(43) Date of publication of application: **31.12.2025**
(21) Application number: 23923894.2
(22) Date of filing: 28.12.2023
(51) Int. Cl.: E04B 1/76, B30B 11/04, B30B 15/00, C04B 30/02, H01M 10/658

(54) **HEAT INSULATION MATERIAL, PREPARATION METHOD THEREFOR, HEAT INSULATION MEMBER, HEAT INSULATION PRODUCT, BATTERY AND ELECTRICAL APPARATUS**

(30) Priority: 20.02.2023 CN 202310137934; 20.02.2023 CN 202310137933; 22.02.2023 CN 202310151188
(71) Applicant: Gongyi Van-Research Innovation Composite Materials Co., Ltd., Zhengzhou, Henan 451261 (CN)
(72) Inventor: ZHANG, Jicheng, Zhengzhou, Henan 451261 (CN); LIU, Xizong, Zhengzhou, Henan 451261 (CN); PAN, Guangzhen, Zhengzhou, Henan 451261 (CN); ZHAO, Yan, Zhengzhou, Henan 451261 (CN); MA, Jinmiao, Zhengzhou, Henan 451261 (CN); LI, Jing, Zhengzhou, Henan 451261 (CN)
(74) Representative: Herrero & Asociados, S.L.
(86) International application number: PCT/CN2023/142947
(87) International publication number: WO 2024/174731

(57) **Abstract**

A heat insulation material, a preparation method therefor, a heat insulation member, a heat insulation product, a battery and an electrical apparatus. The heat insulation material may comprise heat insulation powder and reinforced phase fibers, the heat insulation powder being loaded on the surfaces of the reinforced phase fibers; and, in parts by mass, the heat insulation powder may be 25-120 parts, and the reinforced phase fibers may be 0.5-40 parts. The heat insulation material has high compactness, and obviously ameliorates the powder falling phenomenon; and moreover, loading the heat insulation powder on the surfaces of the reinforced phase fibers can reduce the agglomerating space and area of the heat insulation powder, thus reducing the agglomeration of the heat insulation powder, and effectively improving the uniformity of the overall performance of the heat insulation material.

## Description

### CROSS-REFERENCE TO RELATED APPLICATIONS

The present application claims priorities to Chinese Patent Application No. 202310137934.9, filed on February 20, 2023, Chinese Patent Application No. 202310137933.4, filed on February 20, 2023, and Chinese Patent Application No. 202310151188.9, filed on February 22, 2023, all of which are herein incorporated by reference in their entirety.

### TECHNICAL FIELD

The present disclosure relates to the field of thermal insulation material technologies, and in particular to a thermal insulation material, a method for making the thermal insulation material, a thermal insulation component, a thermal insulation product, a battery, and an electrical device.

### BACKGROUND

A thermal conductivity coefficient of an aerogel is extremely low, so that the aerogel is an ideal thermal insulation material. However, the aerogel itself has poor strength, and the aerogel usually needs to be compounded with glass fibers, ceramic fibers or other substrates, so that a composite material is formed. The composite material not only retains lightweight, thermal insulation and other characteristics of the aerogel, but also has a certain degree of flexibility and toughness. However, the preparation process of the composite material formed by compounding the aerogel with continuous fibers is complex, and the preparation time is long. At present, a commonly used wet press-molding method requires drying to remove an organic solvent from an interior of a product after press-molding. Volatilization of the organic solvent may easily generate pores inside the product.

### SUMMARY OF THE DISCLOSURE

The present disclosure provides a thermal insulation material, a method for making the thermal insulation material, a thermal insulation component, a thermal insulation product, a battery, and an electrical device. The thermal insulation material in the present disclosure may solve the problems of the presence of pores, poor compactness, severe powder-shedding, and poor overall performance uniformity in the thermal insulation material in related art.

In order to solve the above technical problems, a technical solution in the present disclosure is to provide a thermal insulation material including thermal insulation powders and reinforcing phase fibers. The thermal insulation powders are loaded on surfaces of the reinforcing phase fibers. In parts by mass, the thermal insulation powders range from 25 parts to 120 parts, and the reinforcing phase fibers range from 0.5 parts to 40 parts.

In some embodiments, the thermal insulation powders are loaded on the surfaces of the reinforcing phase fibers through hydrogen bonding and/or electrostatic attraction.

In some embodiments, content of hydroxyl groups on surfaces of the thermal insulation powders ranges from 1.4 groups/nm² to 2.5 groups/nm², and content of the hydroxyl groups on the surfaces of the reinforcing phase fibers ranges from 1 groups/nm² to 3 groups/nm².

In some embodiments, the thermal insulation powders include a micron powder; the micron powder is one or more of a fumed silica micron powder, a fumed alumina micron powder, a zirconia micron powder, a titanium oxide micron powder, an iron oxide micron powder, a zirconia aerogel micron powder, a silica aerogel micron powder, an alumina aerogel micron powder, silica fume, white carbon black, diatomite, and fly ash; and a particle size of the micron powder ranges from 1µm to 100µm. And/alternatively, the thermal insulation powders include a nano-powder; the nano-powder is one or more of a fumed silica nano-powder, a fumed alumina nano-powder, a zirconia nano-powder, a titanium oxide nano-powder, an iron oxide nano-powder, a zirconia aerogel nano-powder, a silica aerogel nano-powder, an alumina aerogel nano-powder; and a particle size of the nano-powder ranges from 5nm to 50nm.

In some embodiments, the thermal insulation powders include the nano-powders, a plurality of the nano-powders are agglomerated to form a micron-sized aggregate with a porous structure, and nanoscale pores are defined in the aggregate.

In some embodiments, the thermal insulation powders include the nano-powders and the micron powders; and in parts by mass, the nano-powders range from 25 parts to 90 parts, and the micron powders range from 0 parts to 30 parts.

In some embodiments, the reinforcing phase fibers include one or more of glass fibers, alumina fibers, and alumina silicate fibers; and the reinforcing phase fibers have diameters from 1µm to 20µm and lengths from 4mm to 20mm.

In some embodiments, the thermal insulation material consists of the thermal insulation powders and the reinforcing phase fibers.

In some embodiments, the thermal insulation material further includes an infrared light-blocking agent; the infrared light-blocking agent is one or more of silicon carbide, titanium dioxide, zirconium oxide, and zinc oxide; or the infrared light-blocking agent is a potassium hexatitanate whisker or a silicon carbide whisker; and in parts by mass, the infrared light-blocking agent ranges from 0 parts to 60 parts. And/alternatively, the thermal insulation material further includes a getter; the getter is one or more of an activated carbon, a barium lithium alloy activator, calcium oxide, magnesium oxide, and a silica gel; and in parts by mass, the getter ranges from 0 parts to 10 parts. And/alternatively, the thermal insulation material further includes a desiccant; the desiccant is one or more of anhydrous calcium chloride, alkali lime, quicklime, and solid sodium hydroxide; and in parts by mass, the desiccant ranges from 0 parts to 10 parts.

In order to solve the above technical problems, another technical solution in the present disclosure is to provide a method for making a thermal insulation material that is configured for preparing the thermal insulation material according to any one of above embodiments. The method includes:
weighing the thermal insulation powders and the reinforcing phase fibers, and placing the thermal insulation powders and the reinforcing phase fibers in a mixing device for dispersion and mixing, to obtain mixed powders; and
placing the mixed powders in a mold, and press-molding the mixed powders using a pressing device, to obtain the thermal insulation material.

In some embodiments, the weighing the thermal insulation powders and the reinforcing phase fibers, and placing the thermal insulation powders and the reinforcing phase fibers in a mixing device for dispersion and mixing, to obtain mixed powders, further includes:
loosening and crushing the reinforcing phase fibers.

In some embodiments, the placing the mixed powders in a mold, and press-molding the mixed powders using a pressing device, to obtain the thermal insulation material, further includes:
performing an exhausting operation; wherein the exhausting operation is performed before and during the press-molding, and the exhausting operation is performed through an exhaust plate with microporous or/and a mold with the microporous, and a pressure for the press-molding ranges from 0.5Mpa to 20Mpa, and a holding time ranges from 10s to 300s.

In some embodiments, the weighing the thermal insulation powders and the reinforcing phase fibers, and placing the thermal insulation powders and the reinforcing phase fibers in a mixing device for dispersion and mixing, to obtain mixed powders, further includes:
performing surface treatment on the thermal insulation powders; wherein the surface treatment includes bonding an appropriate amount of solvent on surfaces of the thermal insulation powders through atomization; and the solvent is an alcohol solvent, and the alcohol solvent includes ethanol, propanol, or butanol.

In some embodiments, the weighing the thermal insulation powders and the reinforcing phase fibers, and placing the thermal insulation powders and the reinforcing phase fibers in a mixing device for dispersion and mixing, to obtain mixed powders, further includes:
modifying the reinforcing phase fibers, so that functional groups configured for crosslinking with the thermal insulation powders are disposed on the surfaces of the reinforcing phase fibers.

In order to solve the above technical problems, yet another technical solution in the present disclosure is to provide a thermal insulation component. The thermal insulation component includes a thermal insulation layer including the thermal insulation material according to any one of above embodiments, and a structural layer disposed on one or both sides of the thermal insulation layer.

In some embodiments, the structural layer is a reinforcement layer, and the reinforcement layer is a hard reinforcement layer or a soft reinforcement layer; the hard reinforcement layer is one of a resin plate, a rubber sheet, glass, and a semi-cured sheet, and the soft reinforcement layer is non-woven fabric or high-silicon oxide fabric. Alternatively, the structural layer is a reflective layer or an encapsulation layer; the reflective layer is an aluminum foil, aluminum foil fabric, or a copper foil; and the encapsulation layer is one of a polyethylene terephthalate film, a polyimide film, a polyethylene film, a Polyether Ether Ketone film, a Polytetrafluoroethylene film, non-woven fabric, and high-silicon oxide fabric.

In order to solve the above technical problems, yet another technical solution in the present disclosure is to provide a thermal insulation product that is configured for separating individual battery cells or for separating the individual battery cells from components other than the battery cells. The thermal insulation product includes the thermal insulation component according to any one of above embodiments, and a connection component configured to connect the thermal insulation component with the battery cells or the components other than the battery cells.

In some embodiments, the connection component is a glue layer.

In order to solve the above technical problems, yet another technical solution in the present disclosure is to provide a battery including at least one battery cell and/or at least one battery module and/or a battery housing, and the thermal insulation product according to any one of above embodiments. The thermal insulation product is disposed between adjacent battery cells and/or between the battery cell and the battery housing and/or between the battery cell and the battery module and/or between the battery modules and/or between the battery module and the battery housing.

In order to solve the above technical problems, yet another technical solution in the present disclosure is to provide an electrical device including the above battery.

Different from the related art, the effects of the present disclosure are as follows. The present disclosure includes a thermal insulation material, a method for making the thermal insulation material, a thermal insulation component, a thermal insulation product, a battery, and an electrical device. The thermal insulation material includes thermal insulation powders and reinforcing phase fibers. The thermal insulation powders are loaded on surfaces of the reinforcing phase fibers. In parts by mass, the thermal insulation powders range from 25 parts to 120 parts, and the reinforcing phase fibers range from 0.5 parts to 40 parts. By loading the thermal insulation powders on the surfaces of the reinforcing phase fibers, compactness of the thermal insulation material is enhanced and phenomenon of powder-shedding is significantly reduced. Moreover, the thermal insulation powders are loaded on the surfaces of the reinforcing phase fibers, which may reduce a space and an area for thermal insulation powders agglomeration, thereby reducing the agglomeration of the thermal insulation powders and effectively improving uniformity of overall performance of the thermal insulation material.

### BRIEF DESCRIPTION OF THE DRAWINGS

FIG. 1 is a method for making a thermal insulation material in some embodiments of the present disclosure.
FIG. 2 is a structural schematic view of a thermal insulation layer in some embodiments of the present disclosure.
FIG. 3 is a structural schematic view of a thermal insulation component in some embodiments of the present disclosure.
FIG. 4 is a structural schematic view of a thermal insulation product in some embodiments of the present disclosure.
FIG. 5 is a structural schematic view of a battery in some embodiments of the present disclosure.

Explanation of reference signs: 1 - thermal insulation product; 2 - battery cell; 3 - battery housing; 11 - thermal insulation component; 12 - connection component; 111 - thermal insulation layer; 112 - structural layer; 1111 - thermal insulation powder; 1112 - reinforcing phase fiber.

### DETAILED DESCRIPTION

The technical solutions in some embodiments of the present disclosure may be clearly and completely described in conjunction with accompanying drawings in some embodiments of the present disclosure. Obviously, the described embodiments are only a part of the embodiments of the present disclosure, and not all embodiments. Based on the embodiments in the present disclosure, all other embodiments obtained by those of ordinary skill in the art without creative effort are within the scope of the present disclosure.

The terms "first", "second", and "third" in the present disclosure are only configured to describe and cannot be understood as indicating or implying relative importance or implicitly indicating the quantity of technical features indicated. Therefore, features that are defined as "first", "second", and "third" may explicitly or implicitly include at least one of these features. In the description of the present disclosure, "multiple" means at least two, such as two, three, etc., unless otherwise expressly and specifically qualified. All directional indications (such as up, down, left, right, front, rear, or the like) in some embodiments of the present disclosure are only configured to explain a relative position relationship between components in a specific posture (as shown in the accompanying drawings), a motion situation between the components in the specific posture (as shown in the accompanying drawings), or the like. When the specific posture is changed, the directional indication is also changed accordingly. In addition, the terms "including", "comprising", and "having", as well as any variations of the terms "including", "comprising", and "having", are intended to cover non-exclusive inclusions. For example, a process, method, system, product, or device that includes a series of operations or units is not limited to the listed operations or units, but optionally includes operations or units that are not listed, or optionally includes other operations or units that are inherent to these processes, methods, products, or devices.

The reference to "embodiment" in the present disclosure means that, specific features, structures, or characteristics described in conjunction with some embodiments may be included in at least one embodiment of the present disclosure. The phrase appearing in various positions in the specification does not necessarily refer to the same embodiment, nor is it an independent or alternative embodiment that is mutually exclusive with other embodiments. Those of ordinary skill in the art explicitly and implicitly understand that the embodiments described in the present disclosure may be combined with other embodiments.

The present disclosure may be explained in detail by combining the accompanying drawings and some embodiments.

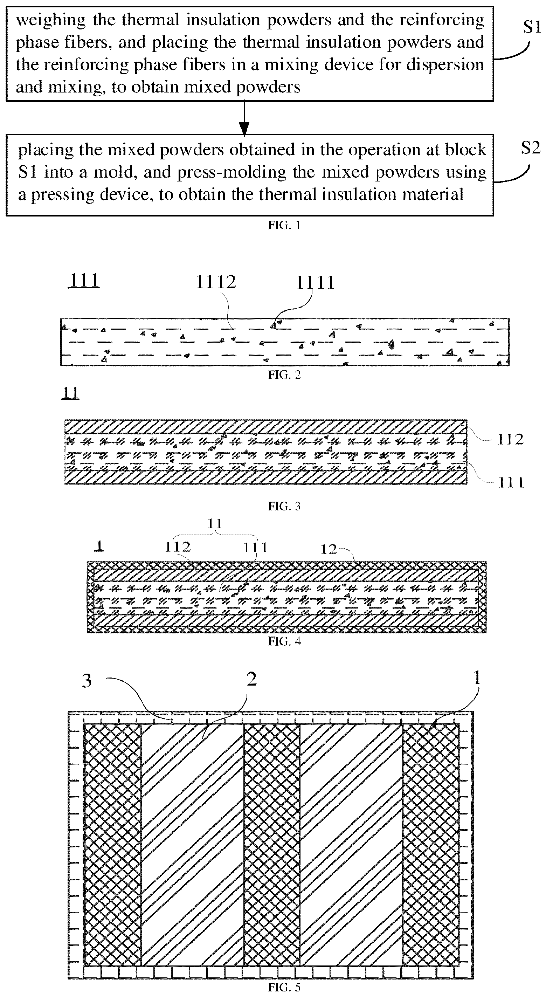

As illustrated in FIGS. 1-5, FIG. 1 is a method for making a thermal insulation material in some embodiments of the present disclosure. FIG. 2 is a structural schematic view of a thermal insulation layer in some embodiments of the present disclosure. FIG. 3 is a structural schematic view of a thermal insulation component in some embodiments of the present disclosure. FIG. 4 is a structural schematic view of a thermal insulation product in some embodiments of the present disclosure. FIG. 5 is a structural schematic view of a battery in some embodiments of the present disclosure. The present disclosure provides a thermal insulation material that may be applied in the field of new energy batteries or construction to ensure thermal insulation performance. The thermal insulation material may include thermal insulation powders 1111 and reinforcing phase fibers 1112, and the thermal insulation powders 1111 are loaded on surfaces of the reinforcing phase fibers 1112. In parts by mass, the thermal insulation powders 1111 may range from 25 parts to 120 parts, and the reinforcing phase fibers 1112 may range from 0.5 parts to 40 parts. In this way, by loading the thermal insulation powders 1111 onto the surfaces of the reinforcing phase fibers 1112, compactness of the thermal insulation material is enhanced and phenomenon of powder-shedding is significantly reduced. Moreover, the thermal insulation powders are loaded on the surfaces of the reinforcing phase fibers, which may reduce a space and an area for thermal insulation powders agglomeration, thereby reducing the agglomeration of the thermal insulation powders and effectively improving uniformity of overall performance of the thermal insulation material.

The thermal insulation powders are loaded on the surfaces of the reinforcing phase fibers, so that after the thermal insulation material is formed by press-molding, pores formed by overlap between the reinforcing phase fibers are filled with the thermal insulation powders loaded on the surfaces of the reinforcing phase fibers. A pore volume between the powders in a finished product is reduced. The thermal insulation performance of the finished product is mainly related to the properties of the thermal insulation powders and the reinforcing phase fibers themselves. The thermal insulation powders are uniformly dispersed on the surfaces of the fibers, which may also enhance the thermal insulation performance of the finished product. The finished product, after press-molding, is not easy to crack and has good mechanical properties.

In some embodiments, a vibration powder-shedding rate of the thermal insulation powders is less than or equal to 5%. In some embodiments, the vibration powder-shedding rate of the thermal insulation powders may be measured through a vibration powder-shedding test. In some embodiments, a vibration sieve with a frequency of 1400 rad/s and an amplitude of 3mm is used to treat a thermal insulation component for 30 minutes. The ratio of the mass of the powder shed from the thermal insulation material to the mass of the original thermal insulation material is measured to obtain the vibration powder-shedding rate of the thermal insulation powders.

The thermal insulation powders are loaded on the surfaces of the reinforcing phase fibers through hydrogen bonding and/or electrostatic attraction. The content of the hydroxyl groups on the surfaces of the thermal insulation powders ranges from 1.4 groups/nm² to 2.5 groups/nm², and the content of the hydroxyl groups on the surfaces of the reinforcing phase fibers ranges from 1 group/nm² to 3 groups/nm². The surfaces of the reinforcing phase fibers carry certain functional groups that may crosslink with the thermal insulation powders. During a dispersion process, the thermal insulation powders and the functional groups on the surfaces of the reinforcing phase fibers may attract each other. Through electrostatic or/and hydrogen bonding interactions, the thermal insulation powders are initially loaded on the surfaces of the reinforcing phase fibers, resulting in uniform dispersion of the raw materials. Subsequently, it is formed by press-molding. Under certain pressure conditions, the thermal insulation powders are tightly combined with the reinforcing phase fibers, and the thermal insulation powders are further loaded on the surfaces of the reinforcing phase fibers, resulting in a dense thermal insulation material and a significant improvement in powder-shedding. The thermal insulation powders are loaded on the surfaces of the reinforcing phase fibers, which may reduce the space and the area for thermal insulation powders agglomeration, thereby reducing the agglomeration of the thermal insulation powders and improving the uniformity of overall performance. In some embodiments, the thermal insulation powders may include a micron powder. The micron powder is one or more of a fumed silica micron powder, a fumed alumina micron powder, a zirconia micron powder, a titanium oxide micron powder, an iron oxide micron powder, a zirconia aerogel micron powder, a silica aerogel micron powder, an alumina aerogel micron powder, silica fume, white carbon black, diatomite, and fly ash. In some embodiments, a particle size of the micron powder ranges from 1µm to 100µm. In some embodiments, the particle size of the micron powder ranges from 5µm to 50µm. In some embodiments, the particle size of the micron powder may be any one of 5µm, 10µm, 20µm, 40µm, and 50µm.

In some embodiments, the thermal insulation powders may also include a nano-powder. The nano-powder is one or more of a fumed silica nano-powder, a fumed alumina nano-powder, a zirconia nano-powder, a titanium oxide nano-powder, an iron oxide nano-powder, a zirconia aerogel nano-powder, a silica aerogel nano-powder, an alumina aerogel nano-powder. A particle size of the nano-powder ranges from 5nm to 100nm. In some embodiments, the particle size of the nano-powder ranges from 5nm to 50nm. In some embodiments, the particle size of the nano-powders may be any one of 5nm, 10nm, 20µm, 40µm, and 50µm.

Compared with using only the micron powders, the nano-powders are easier to disperse. In addition, according to particle packing theory, the pores between nano-powders after packing are smaller, and the finished product is more compact after press-molding. Compared with micron particles, the powders aggregates formed by packing nano-particles have a finer and more uniform microporous structure, resulting in a lower solid-phase thermal conductivity coefficient of the molded thermal insulation material, so that the thermal insulation component has better thermal insulation performance.

In some embodiments, multiple nano-powders are agglomerated to form a micron-sized aggregate with a porous structure. The nanoscale pores are defined in the aggregate. The particle size of the nanoscale particles generally ranges from 1nm to 100nm. In some embodiments, the particle size of the nanoscale particles ranges from 5nm to 50nm. This size range makes the surface energy of the nano-particles high, and the nano-particles are extremely prone to agglomeration. Moreover, a van der Waals force, an electrostatic force, a hydrogen bond, an ion interaction, and other forces between the nano-particles may also cause the nanoparticles aggregation, forming micro-scale aggregates with the porous structures. In these aggregates, a size of a gap between multiple nano-powders may range from 1nm to 100nm. In some embodiments, the size of the gap between the multiple nano-powders may range from 5nm to 50nm. That is, the particle size of the aggregate measured by a conventional measurement method is micron-scale, but the aggregate may still be observed by methods such as scanning electron microscope (SEM) or transmission electron microscope (TEM) that the aggregate is formed by agglomeration of multiple nano-particles.

In some embodiments, the thermal insulation powders may only include micron powders, or only include nano-powders, or include micron powders and nano-powders. In some embodiments, the thermal insulation powders may be composed of nano-powders and micron powders, in parts by mass, the nano-powders may range from 25 parts to 90 parts, and the micron powders may range from 0 parts to 30 parts. In this way, the compactness of the thermal insulation material is improved through the joint action of the micron powders and the nano-powders, and the temperature resistance of the thermal insulation material is improved by adding the micron powders. The mixture of the nano-powders and the micron powders with different particle sizes improves temperature resistance and provides skeleton support.

In some embodiments, the reinforcing phase fibers may include one or more of glass fibers, alumina fibers, and aluminum silicate fibers. The glass fibers include high-silicon oxide fibers or quartz fibers. In some embodiments, a diameter of the reinforcing phase fiber ranges from 1µm to 20µ m, and a length of the reinforcing phase fiber ranges from 4mm to 20mm. In some embodiments, the diameter of the reinforcing phase fiber may be any one of 1µm, 5µm, 10µm, 15µm, and 20µm; and the length of the reinforcing fiber may be any one of 4mm, 8mm, 12mm, 16mm, and 20mm. Compared with organic fibers, inorganic fibers are selected in the present disclosure, the finished product prepared by press-molding has good temperature resistance and excellent mechanical properties. In some embodiments, the organic fibers may also be used as the reinforcing phase fibers, and a diameter and a length of the organic fiber is not limited to the range listed in the present disclosure. In some embodiments, the organic fiber with a length of 40mm may be used as the reinforcing phase fiber, so as to prepare the thermal insulation component with tensile and crack resistance properties.

In some embodiments, the thermal insulation material may be composed of the thermal insulation powders and the reinforcing phase fibers. That is, the thermal insulation material in some embodiments only includes the thermal insulation powders and the reinforcing phase fibers, in parts by mass, the thermal insulation powders may range from 25 parts to 120 parts, and the reinforcing phase fibers may range from 0.5 parts to 40 parts. In some embodiments, the thermal insulation material may also include other additives, and the specific types and contents of the additives may be selected according to the actual situation. In some embodiments, the content of the additives generally does not exceed 10% of the total mass of the thermal insulation material. In some embodiments, the content of the additives does not exceed 5% of the total mass of the thermal insulation material.

In some embodiments, the thermal insulation material may also include an infrared light-blocking agent. The infrared light-blocking agent may be one or more of silicon carbide, titanium dioxide, zirconia, and zinc oxide. A particle size of the infrared light-blocking agent ranges from 2µm to 10µm. In some embodiments, the particle size of the infrared light-blocking agent may be any one of 2µm, 4µm, 6µm, 8µm, and 10µm. In some embodiments, the infrared light-blocking agent may also be a potassium hexatitanate whisker or a silicon carbide whisker. An aspect ratio of the potassium hexatitanate whisker may range from 5 to 25, and a diameter of the potassium hexatitanate whisker ranges from 1.5µm to 5µm. An aspect ratio of the silicon carbide whisker ranges from 20 to 30, and a diameter of the silicon carbide whisker ranges from 0.5µm to 2.5µm. A surface of the infrared light-blocking agent may also carry certain functional groups. In some embodiments, the content of the hydroxyl groups on the surface of the silicon carbide ranges from 0.015mmol/g to 0.03mmol/g. In some embodiments, in parts by mass, the amount of the infrared light-blocking agent added may range from 0 parts to 60 parts, so as to enhance the temperature resistance of the thermal insulation material.

In some embodiments, the thermal insulation material may also include a getter. The getter may be one or more of activated carbon, barium-lithium alloy activator, calcium oxide, magnesium oxide, and silica gel. In some embodiments, in parts by mass, the amount of the getter added may range from 0 parts to 10 parts. The thermal insulation material may also include a desiccant. The desiccant is one or more of anhydrous calcium chloride, alkali lime, quicklime, and solid sodium hydroxide. In some embodiments, the amount of the desiccant added may range from 0 parts to 10 parts. In this way, adding the getter and/or the desiccant to the thermal insulation material may improve the encapsulation effect when the thermal insulation material is encapsulated.

In some embodiments, the thermal insulation material may be composed of the nano-powders and the reinforcing phase fibers; in parts by mass, the nano-powders: the reinforcing phase fibers = (25-90): (0.5-40).

In some embodiments, the thermal insulation material may also be composed of the nano-powders, the reinforcing phase fibers and the infrared light-blocking agent; in parts by mass, the nano-powders: the reinforcing phase fibers: the infrared light-blocking agent = (25-90): (0.5-40): (0-60).

In some embodiments, the thermal insulation material may also be composed of the nano-powders, the reinforcing phase fibers and the micron powders; in parts by mass, the nano-powders: the reinforcing phase fibers: the micron powders = (25-90): (0.5-40): (0-30).

In some embodiments, the thermal insulation material may also be composed of the nano-powders, the reinforcing phase fibers, the infrared light-blocking agent and the micron powders; in parts by mass, the nano-powders: the reinforcing phase fibers: the infrared light-blocking agent: the micron powders = (25-90): (0.5-40): (0-60): (0-30).

In some embodiments, the thermal insulation material may also be composed of the nano-powders, the reinforcing phase fibers, the desiccant and the getter; in parts by mass, the nano-powders: the reinforcing phase fibers: the desiccant: the getter = (25-90): (0.5-40): (0-10): (0-10).

In some embodiments, the thermal insulation material may also be composed of the nano-powders, the reinforcing phase fibers, the infrared light-blocking agent, the desiccant and the getter; in parts by mass, the nano-powders: the reinforcing phase fibers: the infrared light-blocking agent: the desiccant: the getter = (25-90): (0.5-40): (0-60): (0-10): (0-10).

In some embodiments, the thermal insulation material may also be composed of the nano-powders, the reinforcing phase fibers, the micron powders, the desiccant and the getter; in parts by mass, the nano-powders: the reinforcing phase fibers: the micron powders: the desiccant: the getter = (25-90): (0.5-40): (0-30): (0-10): (0-10): (0-10).

In some embodiments, the thermal insulation material may also be composed of the nano-powders, the reinforcing phase fibers, the infrared light-blocking agent, the micron powders, the desiccant and the getter; in parts by mass, the nano-powders: the reinforcing phase fibers: the infrared light-blocking agent: the micron powders: the desiccant: the getter = (25-90): (0.5-40): (0-60): (0-30): (0-10): (0-10).

In the embodiments of the present disclosure, the formula of the thermal insulation material is different according to the different usage temperatures of the thermal insulation material after press-molding. The nano-powders, the reinforcing phase fibers, and the infrared light-blocking agent play a major role in the thermal insulation performance. In terms of raw materials, the usage temperature of the fumed silica nano-powders is less than 1100°C, and the usage temperature of ordinary glass fibers is less than 800°C. In some embodiments, when the usage temperature of the product is less than 800°C, the preferred raw materials are fumed silica nano-powders and the ordinary glass fibers. When the usage temperature of the product ranges from 800°C to 1100°C, due to the inability of the ordinary glass fibers to withstand this temperature range, the high-silicon oxide fibers with higher temperature resistant, alumina fibers, aluminum silicate fibers, or quartz fibers may be selected in combination with the fumed silica nano-powders. When the use temperature of the product is greater than 1100°C, the nano-powders may be the fumed alumina nano-powders with higher temperature resistant, and the fumed alumina nano-powders are in combination with the high-silicon oxide fibers with higher temperature resistant, or the alumina fibers, the aluminum silicate fibers, or the quartz fibers.

The embodiments of the present disclosure provide the thermal insulation material that may be applied in the field of new energy batteries or construction to ensure the thermal insulation performance. The thermal insulation material may include the thermal insulation powders and the reinforcing phase fibers, and the thermal insulation powders are loaded on the surfaces of the reinforcing phase fibers. In parts by mass, the thermal insulation powders may range from 25 parts to 120 parts, and the reinforcing phase fibers may range from 0.5 parts to 40 parts. In this way, by loading the thermal insulation powders on the surfaces of the reinforcing phase fibers, the compactness of the thermal insulation material is enhanced and the phenomenon of powder-shedding is significantly reduced. Moreover, the thermal insulation powders are loaded on the surfaces of the reinforcing phase fibers, which may reduce the space and the area for thermal insulation powders agglomeration, thereby reducing the agglomeration of the thermal insulation powders and effectively improving uniformity of overall performance of the thermal insulation material.

As illustrated in FIG. 1, in some embodiments, the present disclosure further provides a method for making the thermal insulation material, which is configured to prepare the thermal insulation material in any one of the above embodiments. The method for making the thermal insulation material includes the following operations at block S1 and at block S2.

At block S1, the method for making the thermal insulation material may include weighing the thermal insulation powders and the reinforcing phase fibers, and placing the thermal insulation powders and the reinforcing phase fibers in a mixing device for dispersion and mixing, to obtain mixed powders.

In some embodiments, the raw materials may be mixed by airflow dispersion sedimentation, and the thermal insulation powders and the reinforcing phase fibers may be uniformly dispersed, and the reinforcing phase fibers may be predominantly oriented in a horizontal direction. Th airflow dispersion may be achieved by using an airflow disperser in related art.

In the dispersion and mixing stage, there is a certain degree of crosslinking between the thermal insulation powders and the reinforcing phase fibers, which allows the thermal insulation powders to be initially loaded on the surfaces of the reinforcing phase fibers, resulting in a more uniform dispersion of the mixed powders. Subsequently, it is formed by press-molding. Under certain pressure conditions, the thermal insulation powders are tightly combined with the reinforcing phase fibers (mechanism: during the dispersion process, the thermal insulation powders and the functional groups on the surfaces of the reinforcing phase fibers may attract each other, and the thermal insulation powders aggregate on the surfaces of the reinforcing phase fibers through electrostatic, hydrogen bonding, etc., forming material clusters and achieving cross scale mixing of the thermal insulation powders and the reinforcing phase fibers; during the molding process of the mixed materials, the material clusters are compressed, and most of the air molecules are expelled, a distance between the powder particles is further reduced, increasing contact points between the powders and enhancing the inter-particle interactions in the material clusters; moreover, the reinforcing phase fibers in the aggregation are fixed in position by an external force, and the uniformly distributed reinforcing phase fibers form a semi-continuous mechanical reinforcing phase, which macroscopically improves the mechanical strength of the thermal insulation component after press-molding.

In some embodiments, the operation S1 may include the following operations S11, S12, and S13.

S11, the operation S1 may include loosening and crushing the reinforcing phase fibers. In some embodiments, the reinforcing phase fibers in the raw materials used in the operation S1 are single short fibers. The fiber cluster with a length from 10mm to 30mm may be subjected to loosening and crushing treatment using a loosening device, so as to transform the fiber cluster into individual fibers. The fiber cluster with a length from 4mm to 20mm may be subjected to only loosening treatment to obtain the individual fibers.

In some embodiments, the single short fiber with a diameter from 1µm to 20µm and a length from 4mm to 20mm may also be directly purchased for use.

S12, the operation S1 may include modifying the reinforcing phase fibers, so that the required functional groups that are crosslinked with the thermal insulation powders are disposed on the surfaces of the reinforcing phase fibers. In some embodiments, the reinforcing phase fibers may be modified, so that the surfaces of the reinforcing phase fibers are provided with the required functional groups that are crosslinked with the nano-powders. The functional group is selected as a polar group or a graft containing the polar group, so that the thermal insulation powders may be more efficiently connected to the reinforcing phase fibers through at least one of the hydrogen bonding and the electrostatic attraction. The surfaces of the reinforcing phase fibers are treated through acid-base modification and/or oxidation modification.

In some embodiments, when the glass fibers are selected as the reinforcing phase fibers, the acid-base treatment method may be used to form depressions or micropores on the surface of the glass fibers, so as to increase the contact area, and then a silane coupling agent is used to soak the glass fiber, so that the surfaces of the glass fibers have certain silicon hydroxyl groups. The silicon hydroxyl groups may be crosslinked with the nano-powders with hydroxyl groups and silicon hydroxyl groups on the surface to form hydrogen bonds (mechanism: the acid-base etching treatment method is mainly to react with the alkali metal oxide or silicon oxide in the glass fibers, so that some corrosion depressions or micropores are formed on the surface of the fibers, so as to increase the contact area; during the surface modification of the glass fibers, a certain concentration of hydrochloric acid is used in advance to treat the glass fibers, so that a large number of Si-OH bonds are generated on the surfaces of the glass fibers, effectively increasing the surface area and the number of reaction functional groups; the silane coupling agent is used to soak the glass fibers, and the alkoxy groups at an end of the silane coupling agent may be hydrolyzed and react with the hydroxyl groups on the surfaces of the glass fibers to form silicon oxygen bonds; and the treatment effect of silane coupling agent is significant, good interfacial adhesion may be obtained, and the surfaces of the modified glass fibers have the silicon hydroxyl groups). When the alumina fibers or the aluminum silicate fibers are selected as the reinforcing phase fibers, potassium permanganate solution, concentrated nitric acid solution, concentrated sulfuric acid and other liquids may be selected as oxidants to oxidize the surfaces of the fibers (mechanism: the surfaces of the fibers may be effectively modified by using oxidation modification technology to achieve the required surface state; and the alumina fibers or aluminum silicate fibers may undergo oxidation reaction under acidic conditions, the hydroxyl groups or carboxyl groups may be generated on the surfaces of the fibers, and the hydroxyl groups or the carboxyl groups may be crosslinked with the hydroxyl groups and the silicon hydroxyl groups on the surfaces of the nano-powders in the form of hydrogen bond).

S13, the operation S1 may include treating the surfaces of the thermal insulation powders; wherein the surface treatment involves bonding an appropriate amount of solvent on the surfaces of the thermal insulation powders through atomization. The solvent is an alcohol solvent that includes ethanol, propanol, or butanol.

In some embodiments, the thermal insulation powders may be wetted by atomization, so as to reduce static electricity and avoid difficult demolding after press-molding.

At block S2, the method for making the thermal insulation material may include placing the mixed powders obtained in the operation at block S1 into a mold, and press-molding the mixed powders using a pressing device, to obtain the thermal insulation material.

In some embodiments, the reinforcing phase fibers may include reinforcing phase inorganic fibers and/or reinforcing phase organic fibers.

In some embodiments, the operation S2 may include the following operations S21 and S22.

S21, the operation S2 may include after placing the mixed powders into the mold, changing directions of the reinforcing phase inorganic fibers and/or the reinforcing phase organic fibers in the mixed powders, and then press-molding using the pressing device, to obtain the thermal insulation material.

In some embodiments, the directions of the reinforcing phase fibers may be changed through a mechanical force, an electric field, or a magnetic field. Among these processes, a needle punching technology may be used. By using a needle to repeatedly move up and down in the mold containing the mixed powders, the fibers distribution is disrupted, so that the reinforcing phase inorganic fibers and/or the reinforcing phase organic fibers in the mixed powders change from the horizontal direction to other directions, increasing entanglement points between fibers and improving the mechanical strength of the thermal insulation material. The needle punching process in the related art is mostly used for fabric such as felt and fabric. The needle punching process in the present disclosure is a process of calibrating the directions of the fibers of the mixed powders in the mold through the needle. Before press-molding and after dispersion, the needle punching process is added to promote the transformation of the reinforcing phase inorganic fibers and/or the reinforcing phase organic fibers from the horizontal direction to other directions, increasing the entanglement points between the fibers and overall improving the mechanical properties of the thermal insulation product.

S22, the operation S2 may include an exhausting operation.

In some embodiments, the exhausting operation is performed before and during the press-molding, and the exhausting operation is performed through a exhaust plate with microporous or/and a mold with the microporous. A pressure for press-molding ranges from 0.5Mpa to 20Mpa, and a holding time ranges from 10s to 300s. After the operation S2, the method for making the thermal insulation material may include hydrophobic treatment for the thermal insulation material.

In some embodiments, the hydrophobic treatment includes immersing the prepared thermal insulation material in a hydrophobic reagent or introducing a gas-phase hydrophobic reagent into the prepared thermal insulation material. The thermal insulation material treated by immersion for hydrophobicity also needs to be dried.

In some embodiments, the hydrophobic treatment may also be performed before the operation S2, the hydrophobic treatment is directly used to treat the mixed powders. In this way, the thermal insulation material after press-molding does not need to undergo hydrophobic treatment again.

The embodiments of the present disclosure provide the method for making the thermal insulation material, which is configured to prepare the thermal insulation material in any one of the above embodiments. The method for making the thermal insulation material may include: first weighing the thermal insulation powders and the reinforcing phase fibers, and placing the thermal insulation powders and the reinforcing phase fibers in the mixing device for dispersion and mixing, to obtain mixed powders; and then placing the mixed powders into the mold, and press-molding the mixed powders using the pressing device, to obtain the thermal insulation material. A thickness of the thermal insulation material prepared by this method is controllable, and the thermal insulation materials with different thicknesses may be prepared according to actual needs. In some embodiments, the thickness of the thermal insulation material may be as thin as 1mm, and this thermal insulation material may be placed between two cells of a new energy battery for thermal insulation, which may reduce the usage space while ensuring thermal insulation performance. The thickness of the thermal insulation material may also be controlled in a range from 20mm to 30mm, which may be used in the construction field to ensure the required thermal insulation requirements.

As illustrated in FIGS. 2-3, the embodiments of the present disclosure further provide a thermal insulation component 11, and the thermal insulation component 11 may include a thermal insulation layer 111 and a structural layer 112. The thermal insulation layer 111 may include any one of the thermal insulation materials mentioned in the above embodiments, and the structural layer 112 is disposed on one side or both sides of the thermal insulation layer 111. In some embodiments, the structural layer 112 may be an enhancement layer. In some embodiments, the reinforcement layer may be a hard reinforcement layer or a soft reinforcement layer. The hard reinforcement layer is one of a resin plate, a rubber sheet, glass, and a semi-cured sheet. The soft reinforcement layer is non-woven fabric or high-silicon oxide fabric. The material of the reinforcement layer may be soft or hard. The hard reinforcement layer combined with the thermal insulation layer may be used as a board, and the soft reinforcement layer mainly serves as an encapsulation effect.

In some embodiments, the resin plate may be one of an epoxy resin plate, a phenolic resin plate, a polyamide resin plate, an unsaturated polyester resin plate, a polyimide resin plate, a polypropylene resin plate, and a polycarbonate resin plate. The rubber sheet may be one of a styrene butadiene rubber sheet, a natural rubber sheet, a chloroprene rubber sheet, a butyl rubber sheet, a nitrile rubber sheet, a butadiene rubber sheet, an ethylene propylene rubber sheet, a polyisoprene rubber sheet, a fluororubber sheet, or a silicone rubber sheet. The glass may be one of tempered glass, semi-tempered glass, ultra-white glass, float glass, coated glass, or laminated glass. The semi-cured film is mainly composed of resin and a reinforcing material. The resin is one or more of polyamide resin, thermoplastic polyester resin, polyvinyl acetal resin, polyacrylic acid resin, polyurethane resin, phenolic resin, epoxy resin, amino resin, polyether resin, polyimide resin, unsaturated polyester resin, and organosilicon resin. The reinforcing material is one of natural fibers, artificial fibers, synthetic fibers, inorganic fiber fabric, and non-woven fabric.

In some embodiments, the structural layer 112 may also be a reflective layer or an encapsulation layer. The reflective layer is one of an aluminum foil, aluminum foil fabric, and a copper foil. The encapsulation layer is one of a polyethylene terephthalate (PET) film, a polyimide (PI) film, a polyethylene (PE) film, a Polyether Ether Ketone (PEEK) film, a Polytetrafluoroethylene (PTFE) film, non-woven fabric, and high-silicon oxide fabric. The reflective layer is disposed on at least one side of the thermal insulation layer, so as to isolate the thermal transfer from one side of the thermal insulation material to the other during use. Encapsulating the outer surface of the thermal insulation layer may prevent the thermal insulation material from shedding powders during transportation and use, thereby increasing the service life of the thermal insulation material.

As illustrated in FIG. 4, the embodiments of the present disclosure further provide a thermal insulation product 1 that is configured for separating individual battery cells or for separating the individual battery cells from components other than the battery cells. Thermal insulation product 1 includes the thermal insulation component 11 and a connection component 12. The thermal insulation component 11 is the thermal insulation component 11 as described in any one of the above embodiments. The connection component 12 is configured to connect the thermal insulation component 11 with the battery cell or the component other than the battery cell. In some embodiments, the connection component 12 may be a glue layer. In some embodiments, during press-molding of the mixed powders, different molds may be used to press and form products with different structural forms, such as a conventional component and an irregular component. Different structural forms are combined with different application scenarios, such as different temperature requirements, a low temperature, a medium temperature, and a high temperature.

As illustrated in FIG. 5, the embodiments of the present disclosure further provide a battery. The battery may include at least one battery cell 2 and/or a battery module and/or a battery housing 3, as well as the thermal insulation product 1. The thermal insulation product 1 is the thermal insulation product 1 in any one of the above embodiments. The thermal insulation product 1 may be placed between adjacent battery cells 2, and/or between the battery cell 2 and the battery housing 3, and/or between the battery cell 2 and the battery module, and/or between the battery module and the battery housing 3.

The embodiments of the present disclosure further provide an electrical device, and the electrical device may be an electronic product, such as a new energy vehicle, a computer, or a mobile phone, etc. The electrical device may include the battery mentioned in the above embodiments.

The technical solutions of the present disclosure may be clearly and completely described in conjunction with the embodiments of the present disclosure.

### Examples 1 to 8

Examples 1 to 8 provide the thermal insulation material including the nano-powders and the reinforcing phase fibers, and the nano-powders are loaded on the surfaces of the reinforcing phase fibers through the hydrogen bond and/or the electrostatic attraction. The material ratios and material properties in the examples 1 to 8 are as follows:

| **example** | **nano-powder** | | **reinforcing phase fiber** | | **raw material addition ratio** |
|---|---|---|---|---|---|
| | material | particle size | material | fiber limitation (diameter, length) | nano-powders: reinforcing phase fibers |
| example 1 | fumed silica nano-powder | 20nm | glass fibre | diameter 7µm, length 15 mm | 30: 0.5 |
| example 2 | fumed silica nano-powder | 45nm | quartz fiber | diameter 11µm, length 6 mm | 90: 40 |
| example 3 | fumed alumina nano-powder | 10nm | alumina fiber | diameter 20µm, length 20mm | 30: 10 |
| example 4 | silica aerogel nano-powder | 50nm | aluminum silicate fiber | diameter 6µm, length 8mm | 40: 15 |
| example 5 | fumed silica nano-powder | 30nm | aluminum silicate fiber | diameter 4µm, length 8mm | 55: 20 |
| example 6 | fumed alumina nano-powder | 10nm | glass fibre | diameter 6µm, length 10mm | 80: 30 |
| example 7 | alumina aerogel nano-powder | 50nm | quartz fiber | diameter 12µm, length 13mm | 50: 20 |
| example 8 | fumed silica nano-powder | 15 nm | glass fibre | diameter 15µm, length 20mm | 25: 0.5 |

In the example 1, the content of the hydroxyl groups on the surfaces of the added fumed silica nano-powders is 1.4 groups/nm², and the content of the hydroxyl groups on the surfaces of the added glass fibers is 2 groups/nm². In the example 2, the content of the hydroxyl groups on the surfaces of the added fumed silica nano-powders is 2 groups/nm², and the content of the hydroxyl groups on the surfaces of the added quartz fibers is 1 group/nm². In the example 3, the content of the hydroxyl groups on the surfaces of the added fumed alumina nano-powders is 2.5 groups/nm², and the content of the hydroxyl groups on the surfaces of the added alumina fibers is 3 groups/nm². In the example 4, the content of the hydroxyl groups on the surfaces of the added silica aerogel nano-powders is 1.6 groups/nm², and the content of the hydroxyl groups on the surfaces of the added aluminum silicate fibers is 1.5 groups/nm². In the example 5, the content of the hydroxyl groups on the surfaces of the added fumed silica nano-powders is 1.4 groups/nm², and the content of the hydroxyl groups on the surfaces of the added aluminum silicate fibers is 2.5 groups/nm². In the example 6, the content of the hydroxyl groups on the surfaces of the added fumed alumina nano-powders is 2 groups/nm², and the content of the hydroxyl groups on the surfaces of the added glass fibers is 1 group/nm². In the example 7, the content of the hydroxyl groups on the surfaces of the added alumina aerogel nano-powders is 2.4 groups/nm², and the content of the hydroxyl groups on the surfaces of the added quartz fibers is 3 groups/nm². In the example 8, the content of the hydroxyl groups on the surfaces of the added fumed silica nano-powders is 2.5 groups/nm², and the content of the hydroxyl groups on the surfaces of the added glass fibers is 1.2 groups/nm².

The preparation process of the thermal insulation material in the examples 1 to 8 is as follows:
(1) weighing the nano-powders and the reinforcing phase fibers, and placing the nano-powders and the reinforcing phase fibers into the mixing device for dispersion and mixing, to obtain the mixed powders; and
(2) placing the mixed powders obtained in the operation (1) into the mold, and press-molding the mixed powders using the pressing device, to obtain the thermal insulation material.

In the operation (1) of the example 1, the reinforcing phase fibers are the single fibers that are obtained directly by loosening the fiber cluster with a length of 15mm. In the operation (2), the pressure is 0.5Mpa and the holding time is 300s. Before press-molding, the mixed powders are further pre-exhausted through the exhaust plate, and then press-molding is performed. The hydrophobic treatment is performed on the thermal insulation material obtained in the example 1. The hydrophobic treatment includes immersing the prepared thermal insulation material in the hydrophobic reagent, followed by drying to obtain the hydrophobic thermal insulation material. The thermal insulation material obtained in the example 1 no longer has the structural layer on the outer side.

In the operation (1) of the example 2, the reinforcing phase fibers are the single fibers with diameters of 11µm and lengths of 6mm, which are commercially available. In the operation (2), the pressure is 20MPa and the holding time is 10s. During the press-molding process, the exhausting operation is performed through the mold with the micropores. The hydrophobic treatment is performed on the thermal insulation material obtained in the example 2. The hydrophobic treatment includes introducing the gas-phase hydrophobic reagent into the prepared thermal insulation material. After standing for a period of time, the hydrophobic thermal insulation material is obtained. The reinforcement layer is disposed on the outer side of the hydrophobic thermal insulation material, and the reinforcement layer is the resin plate. One resin plate is disposed on an upper side of the hydrophobic thermal insulation material, another resin plate is disposed on a lower side of the hydrophobic thermal insulation material, and then hot press-molding is performed, to obtain the composite thermal insulation component.

In the operation (1) of the example 3, the reinforcing phase fibers are the single fibers that are obtained by loosening and crushing the fiber clusters with an initial length of 30mm. In the operation (2), the pressure is 10Mpa and the holding time is 150s. Before press-molding, the mixed powders are pre-exhausted through the exhaust plate, and then the exhausting operation is performed during the press-molding process through the mold with the micropores. The thermal insulation material obtained in the example 3 is no longer subjected to the hydrophobic treatment, and no structural layer is disposed on the outer side of its product.

In the operation (1) of the example 4, the reinforcing phase fibers are the single fibers that are obtained by loosening and crushing the fiber clusters with an initial length of 15mm. In the operation (2), the pressure is 5Mpa and the holding time is 250s. Before press-molding, the mixed powders are also pre-exhausted through the exhaust plate, and then press-molding is performed. The reflective layer is disposed on the outer side in the example 4, and the reflective layer is the aluminum foil, the aluminum foil fabric, or the copper foil. The reflective layer is bonded around the thermal insulation material with an adhesive, to obtain the composite thermal insulation component.

In the operation (1) of the example 5, the reinforcing phase fibers are the single fibers with diameters of 12µm and lengths of 8mm, which are commercially available. In the operation (2), the pressure is 0.5Mpa and the holding time is 300s. Before press-molding, the mixed powders are pre-exhausted through the exhaust plate, and then press-molding is performed. The hydrophobic treatment is performed on the thermal insulation layer obtained in the example 5. The hydrophobic treatment includes introducing the gas-phase hydrophobic reagent into the prepared thermal insulation layer. After standing for a period of time, the hydrophobic thermal insulation material is obtained. In the example 5, no structural layer is disposed on the outer side of the thermal insulation layer.

In the operation (1) of the example 6, the reinforcing phase fibers are the single fibers that are obtained by loosening and crushing the fiber clusters with an initial length of 18mm. In the operation (2), the pressure is 10Mpa and the holding time is 180s. During the press-molding process, exhausting operation is performed through the mold with micropores. The thermal insulation layer obtained in the example 6 is no longer subjected to the hydrophobic treatment. The reinforcement layer is disposed on the outer side of the obtained thermal insulation layer, and the reinforcement layer is the resin plate. One resin plate is disposed on an upper side of the thermal insulation layer, another resin plate is disposed on a lower side of the thermal insulation layer, and then hot press-molding is performed, to obtain the thermal insulation component.

In the operation (1) of the example 7, the reinforcing phase fibers are the single fibers that are obtained by loosening and crushing the fiber clusters with an initial length of 20mm. In the operation (2), the pressure is 20Mpa and the holding time is 10s. Before press-molding, the mixed powders are pre-exhausted through the exhaust plate, and then the exhausting operation is performed during the press-molding process through the mold with the microporous. The hydrophobic treatment is performed on the thermal insulation layer obtained in the example 7. The hydrophobic treatment includes immersing the prepared thermal insulation layer in the hydrophobic reagent, followed by drying to obtain the hydrophobic thermal insulation layer. The reinforcement layer is disposed on the outer side of the hydrophobic thermal insulation layer, and the reinforcement layer is the non-woven fabric. The non-woven fabric is bonded around the hydrophobic thermal insulation layer with the adhesive, to obtain the thermal insulation component.

In the operation (1) of the example 8, the reinforcing phase fibers are the single fibers that are obtained directly by loosening the fiber cluster with a length of 20mm. In the operation (2), the pressure is 5Mpa and the holding time is 260s. In the example 8, the encapsulation layer is disposed on the outer side of the thermal insulation layer, and the encapsulation layer is the PET film. By disposing the PET film on the outer side of the thermal insulation layer and then using a plastic encapsulation device to encapsulate the PET film on the outer side of the thermal insulation layer, the thermal insulation component is obtained.

Performance test is performed on the thermal insulation materials that are obtained by press-molding the mixed powders in the examples 1 to 8. A density uniformity test method is as follows: the large sample is cut into small pieces, the density of each piece is measured, an average value is taken, and a variation range is within ± 30kg/m³. A temperature resistance test method is as follows: under the pressure of 0.4Mpa, a heat source of 650 °C is uniformly applied on one side of the thermal insulation material; after 20 minutes, the temperature of a cold surface of the thermal insulation material is measured; and the size of the sample is 110mm × 110mm, and the size of the heat source is 100mm × 100mm. A vibration powder-shedding rate test is as follows: the vibration sieve with the frequency of 1400 rad/s and the amplitude of 3mm is used to treat the thermal insulation component for 30 minutes, and the powder-shedding rate of the thermal insulation material (the ratio of the mass of the powder shed from the thermal insulation material to the mass of the original thermal insulation material) is measured. The test results are as follows:

| **example** | **(density/ g/m³)** | **thermal conductivity coefficient at room temperature/ W/(mk)** | **temperature resistance (temperature of cold surface)** | **compression rate** | **vibration powder-shedding rate/%** |
|---|---|---|---|---|---|
| example 1 | 480 | 0.020 | 85°C | 1Mpa: 12%; 2Mpa: 21% | 4.5% |
| example 2 | 525 | 0.022 | 90°C | 1Mpa: 7%; 2Mpa: 17% | 4% |
| example 3 | 460 | 0.020 | 85°C | 1Mpa: 16%; 2Mpa: 25% | 5% |
| example 4 | 500 | 0.019 | 80°C | 1Mpa: 9%; 2Mpa: 19% | 4.5% |
| example 5 | 400 | 0.019 | 78°C | 1Mpa: 8%; 2Mpa: 19% | 4% |
| example 6 | 430 | 0.018 | 75°C | 1Mpa: 10%; 2Mpa: 22% | 4.5% |
| example 7 | 450 | 0.019 | 70°C | 1Mpa: 12%; 2Mpa: 23% | 5% |
| example 8 | 380 | 0.022 | 75°C | 1Mpa: 29%; 2Mpa: 35% | 5% |

### Examples 9 to 15

The examples 9 to 15 provide the thermal insulation material including the nano-powders, the reinforcing phase fibers and the infrared light-blocking agent. The nano-powders are loaded on the surfaces of reinforcing phase fibers through the hydrogen bonding and/or the electrostatic attraction. The material ratios and the material properties of the examples 9 to 15 are as follows:

| **example** | **nano-powder** | | **reinforcing phase fiber** | | **infrared light-blocking agent** | | **raw material addition ratio** |
|---|---|---|---|---|---|---|---|
| | material | particle size | material | fiber limitation (diameter, length) | material | particle size of infrared light-blocking agent | nano-powders: reinforcing phase fibers: infrared light-blocking agent |
| example 9 | silica aerogel nano-powder | 50nm | aluminum silicate fiber | diameter 20µm, length 7mm | zirconia | 4µm | 60: 20: 35 |
| example 10 | alumina aerogel nano-powder | 40nm | quartz fiber | diameter 15µm, length 20mm | silicon carbide | 2µm | 50: 20: 25 |
| example 11 | fumed silica nano-powder | 30nm | high-silicon oxide fiber | diameter 13µm, length 12mm | zirconia | 9µm | 60: 40: 30 |
| example 12 | fumed alumina nano-powder | 8nm | glass fibre | diameter 6µm, length 9mm | silicon carbide whisker | aspect ratio 25, diameter 2.5µm | 70: 30: 45 |
| example 13 | fumed alumina nano-powder | 8nm | glass fibre | diameter 3µm, length 4mm | silicon carbide whisker | aspect ratio 20, diameter 0.5µm | 50: 25: 30 |
| example 14 | fumed silica nano-powder | 25nm | glass fibre | diameter 20µm, length 8mm | titanium dioxide | 2µm | 80: 30: 50 |
| example 15 | silica aerogel nano-powder | 50nm | quartz fiber | diameter 1 µm, length 6mm | titanium dioxide | 6µm | 90: 40: 60 |

In the example 9, the content of the hydroxyl groups on the surfaces of the added silica aerogel nano-powders is 1.5 groups/nm², and the content of the hydroxyl groups on the surfaces of the added aluminum silicate fibers is 2.5 groups/nm². In the example 10, the content of the hydroxyl groups on the surfaces of the added alumina aerogel nano-powers are 2.1 groups/nm², and the content of the hydroxyl groups on the surfaces of the added quartz fibers is 2.6 groups/nm². In the example 11, the content of the hydroxyl groups on the surfaces of the added fumed silica nano-powders added is 2.2 groups/nm², and the content of the hydroxyl groups on the surfaces of the added high-silicon oxide fibers added is 2.4 groups/nm². In the example 12, the content of the hydroxyl groups on the surfaces of the added fumed alumina nano-powders added is 1.9 groups/nm², and the content of the hydroxyl groups on the surfaces of the added glass fibers is 2.1 groups/nm². In the example 13, the content of the hydroxyl groups on the surfaces of the added fumed alumina nano-powders added is 1.8 groups/nm², and the content of the hydroxyl groups on the surfaces of the added glass fibers is 2.4 groups/nm². In the example 14, the content of the hydroxyl groups on the surfaces of the added fumed silica nano-powders is 2 groups/nm², and the content of the hydroxyl groups on the surfaces of the added glass fibers is 1.4 groups/nm². In the example 15, the content of the hydroxyl groups on the surfaces of the added silica aerogel nano-powders is 2.2 groups/nm², and the content of the hydroxyl groups on the surfaces of the added quartz fibers is 2.4 groups/nm².

The preparation process of the thermal insulation material in the example 9 to 15 is as follows:
(1) weighing the nano-powders, the reinforcing phase fibers, and the infrared light-blocking agent; and placing the nano-powders, the reinforcing phase fibers, and the infrared light-blocking agent into the mixing device for dispersion and mixing, to obtain the mixed powders; and
(2) placing the mixed powders obtained in the operation (1) into the mold, and press-molding the mixed powders using the pressing device, to obtain the thermal insulation material.

In the operation (1) of the example 9, the reinforcing phase fibers are the single fibers with the diameter of 20µm and the length of 7mm, which are commercially available. In the operation (2), the pressure is 6Mpa and the holding time is 240s. Before press-molding, the mixed powders are also pre-exhausted through the exhaust plate, and then press-molding is performed. The thermal insulation material obtained in the example 9 is no longer subjected to the hydrophobic treatment, and no structural layer is disposed on the outer side of its product.

In the operation (1) of the example 10, the reinforcing phase fibers are the single fibers that are obtained by loosening and crushing the fiber clusters with an initial length of 30mm. In the operation (2), the pressure is 7Mpa and the holding time is 220s. During the press-molding process, exhausting operation is performed through the mold with the micropores. The hydrophobic treatment is performed on the thermal insulation material obtained in the example 10. The hydrophobic modification treatment includes immersing the prepared thermal insulation material in the hydrophobic reagent, followed by drying to obtain the hydrophobic thermal insulation material. The outer side of its product no longer has the structural layer.

In the operation (1) of the example 11, the reinforcing phase fibers are the single fibers that are obtained directly by loosening the fiber cluster with a length of 12mm. In the operation (2), the pressure is 14Mpa and the holding time is 170s. Before press-molding, the mixed powders are pre-exhausted through the exhaust plate, and then the exhausting operation is performed during the press-molding process through the mold with the micropores. The thermal insulation material obtained in the example 11 is no longer subjected to the hydrophobic treatment, and no structural layer is disposed on the outer side of its product.

In the operation (1) of the example 12, the reinforcing phase fibers are the single fibers with diameters of 6µm and lengths of 9mm, which are commercially available. In the operation (2), the pressure is 4Mpa and the holding time is 250s. Before press-molding, the mixed powders are pre-exhausted through the exhaust plate, and then press-molding is performed. In the example 12, the mixed powders are subjected to the hydrophobic treatment, and after press-molding, the hydrophobic thermal insulation material is obtained. The soft reinforcement layer is disposed on the outer side of the hydrophobic thermal insulation material, and the high-silicon oxide fabric or the non-woven fabric is bonded around the thermal insulation material with the adhesive, to obtain the composite thermal insulation component.

In the operation (1) of the example 13, the reinforcing phase fibers are the single fibers with diameters of 3µm and lengths of 4mm, which are commercially available. In the operation (2), the pressure is 6Mpa and the holding time is 240s. Before press-molding, the mixed powders are pre-exhausted through the exhaust plate, and then the exhausting operation is performed during the press-molding process through the mold with the micropores. In the example 13, the reinforcement layers are disposed on both sides of the thermal insulation layer, and the reinforcement layers are the rubber sheets. The two rubber sheets are disposed on the upper and lower sides of the thermal insulation layer, respectively; and then hot press-molding is performed, to obtain the thermal insulation component.

In the operation (1) of the example 14, the reinforcing phase fibers are the single fibers that are obtained directly by loosening the fiber cluster with a length of 8mm. In the operation (2), the pressure is 12Mpa and the holding time is 120s. During the press-molding process, the exhausting operation is performed through the mold with the micropores. The hydrophobic treatment is performed on the thermal insulation layer obtained in the example 14. The hydrophobic treatment includes introducing the gas-phase hydrophobic reagent into the prepared thermal insulation layer. After standing for a period of time, the hydrophobic thermal insulation layer is obtained. The reflective layer is disposed on the outer side of the hydrophobic thermal insulation layer, and the reflective layer is the aluminum foil fabric. The aluminum foil fabric is bonded around the hydrophobic thermal insulation layer with the adhesive, to obtain the thermal insulation component.

In the operation (1) of the example 15, the reinforcing phase fibers are the single fibers that are obtained by loosening and crushing the fiber clusters with an initial length of 12mm. In the operation (2), the pressure is 5Mpa and the holding time is 250s. Before press-molding, the mixed powders are also pre-exhausted through the exhaust plate, and then press-molding is performed. The thermal insulation layer obtained in the example 15 no longer has the structural layer.

The performance test is performed on the thermal insulation materials that are obtained by press-molding the mixed powders in the examples 9 to 15. The density uniformity test method is as follows: the large sample is cut into small pieces, the density of each piece is measured, the average value is taken, and the variation range is within ± 30kg/m³. The temperature resistance test method is as follows: under the pressure of 0.4Mpa, the heat source of 650 °C is uniformly applied on one side of the thermal insulation material; after 20 minutes, the temperature of the cold surface of the thermal insulation material is measured; and the size of the sample is 110mm × 110mm, and the size of the heat source is 100mm × 100mm. The vibration powder-shedding rate test is as follows: the vibration sieve with the frequency of 1400 rad/s and the amplitude of 3mm is used to treat the thermal insulation component for 30 minutes, and the powder-shedding rate of the thermal insulation material (the ratio of the mass of the powder shed from the thermal insulation material to the mass of the original thermal insulation material) is measured. The test results are as follows:

| **example** | **(density/ g/m³)** | **thermal conductivity coefficient at room temperature/ W/(mk)** | **temperature resistance (temperature of cold surface)** | **compression rate** | **vibration powder-shedding rate/%** |
|---|---|---|---|---|---|
| example 9 | 500 | 0.023 | 78°C | 1Mpa: 13%; 2Mpa: 24% | 4% |
| example 10 | 520 | 0.023 | 73°C | 1Mpa: 11%; 2Mpa: 20% | 3.5% |
| example 11 | 540 | 0.022 | 80°C | 1Mpa: 10%; 2Mpa: 21% | 3% |
| example 12 | 460 | 0.020 | 75°C | 1Mpa: 14%; 2Mpa: 23% | 5% |
| example 13 | 460 | 0.029 | 70°C | 1Mpa: 12%; 2Mpa: 21% | 4% |
| example 14 | 420 | 0.026 | 75°C | 1Mpa: 15%; 2Mpa: 25% | 4.5% |
| example 15 | 510 | 0.027 | *72°C* | 1Mpa: 8%; 2Mpa: 17% | 3.5% |

### Examples 16 to 22

The examples 16 to 22 provide the thermal insulation material including the nano-powders, the reinforcing phase fibers and the micron powders. The nano-powders are loaded on the surfaces of the reinforcing phase fibers through the hydrogen bonding and/or the electrostatic attraction. The material ratios and the material properties in the examples 16 to 22 are as follows:

| **example** | **nano-powder** | | **reinforcing phase fiber** | | **micron powder** | **raw material addition ratio** |
|---|---|---|---|---|---|---|
| | material | powder limitation (particle size) | material | fiber limitation (diameter, length) | material | nano-powders: reinforcing phase fibers: micron powders |
| example 16 | titanium oxide nano-powder | 35 nm | high-silicon oxide fiber | diameter 9µm, length 8mm | silica aerogel micron powder | 40: 10: 8 |
| example 17 | fumed alumina nano-powder | 5nm | alumina fibre | diameter 10µm, length 20mm | silica fume | 30: 10: 7 |
| example 18 | fumed silica nano-powder | 40nm | glass fibre | diameter 15µm, length 10mm | alumina aerogel micron powder | 25: 0.5: 0.5 |
| example 19 | silica aerogel nano-powder | 20 nm | quartz fiber | diameter 1µm, length 8 mm | diatomite | 90: 40: 30 |
| example 20 | zirconia nano-powder | 45nm | quartz fiber | diameter 6µm, length 9mm | fumed silica micron powder | 60: 25: 20 |
| example 21 | fumed silica nano-powder | 15nm | aluminum silicate fiber | diameter 9µm, length 6mm | silica fume | 35: 15: 7 |
| example 22 | fumed silica nano-powder | 50nm | quartz fiber | diameter 1µm, length 10 mm | diatomite | 80: 35: 30 |

In the example 16, the content of the hydroxyl groups on the surfaces of the added titanium oxide nano-powders is 1.6 groups/nm², and the content of the hydroxyl groups on the surfaces of the added high-silicon oxide fibers is 2.8 groups/nm². In the example 17, the content of the hydroxyl groups on the surfaces of the added fumed alumina nano-powders is 1.8 groups/nm², and the content of the hydroxyl groups on the surfaces of the added alumina fibers is 2.5 groups/nm². In the example 18, the content of the hydroxyl groups on the surfaces of the added fumed silica nano-powders is 2 groups/nm², and the content of the hydroxyl groups on the surfaces of the added glass fibers is 1.5 groups/nm². In the example 19, the content of the hydroxyl groups on the surfaces of the added silica aerogel nano-powders is 1.9 groups/nm², and the content of the hydroxyl groups on the surfaces of the added quartz fibers is 2.5 groups/nm². In the example 20, the content of the hydroxyl groups on the surfaces of the added zirconia nano-powders is 1.8 groups/nm², and the content of the hydroxyl groups on the surfaces of the added quartz fibers is 2.4 groups/nm². In the example 21, the content of the hydroxyl groups on the surfaces of the added fumed silica nano-powders is 2.3 groups/nm², and the content of the hydroxyl groups on the surfaces of the added aluminum silicate fibers is 1.8 groups/nm². In the example 22, the content of the hydroxyl groups on the surfaces of the added fumed silica nano-powders is 1.6 groups/nm², and the content of the hydroxyl groups on the surfaces of the added quartz fibers is 2 groups/nm².

The preparation process of the thermal insulation material in the examples 16 to 22 is as follows:
(1) weighing the nano-powders, the reinforcing phase fibers, and the micron powders; and placing the nano-powders, the reinforcing phase fibers, and the micron powders into the mixing device for dispersion and mixing, to obtain the mixed powders; and
(2) placing the mixed powders obtained in the operation (1) into the mold, and press-molding the mixed powders using the pressing device, to obtain the thermal insulation material.

In the operation (1) of the example 16, the reinforcing phase fibers are the single fibers with diameters of 9µm and lengths of 8mm, which are commercially available. In the operation (2), the pressure is 12Mpa and the holding time is 120s. Before press-molding, the mixed powders are pre-exhausted through the exhaust plate, and then the exhausting operation is performed during the press-molding process through the mold with the micropores. The thermal insulation material obtained in the example 16 is no longer subjected to the hydrophobic treatment, and no structural layer is disposed on the outer side of its product.

In the operation (1) of the example 17, the reinforcing phase fibers are the single fibers that are obtained by loosening and crushing the fiber clusters with an initial length of 30mm. In the operation (2), the pressure is 6Mpa and the holding time is 240s. Before press-molding, the mixed powders are pre-exhausted through the exhaust plate, and then press-molding is performed. The thermal insulation material obtained in the example 17 is no longer subjected to the hydrophobic treatment. The hard reinforcement layer is placed on the outer side of the obtained thermal insulation material. By disposing two hard reinforcement layers on the upper and lower sides of the thermal insulation layer, respectively, and then performing the hot press-molding, the thermal insulation component is obtained. The material of the hard reinforcement layer may be any one of the resin plate, the rubber sheet, the glass, and the semi-cured sheet.

In the operation (1) of the example 18, the reinforcing phase fibers are the single fibers that are obtained directly by loosening the fiber cluster with a length of 10mm. In the operation (2), the pressure is 8Mpa and the holding time is 130s. During the press-molding process, the exhausting operation is performed through the mold with the micropores. The thermal insulation material obtained in the example 18 is no longer subjected to the hydrophobic treatment, and no structural layer is disposed on the outer side of its product.

In the operation (1) of the example 19, the reinforcing phase fibers are the single fibers that are obtained by loosening and crushing the fiber clusters with an initial length of 15mm. In the operation (2), the pressure is 9Mpa and the holding time is 110s. Before press-molding, the mixed powders are pre-exhausted through the exhaust plate, and then press-molding is performed. The hydrophobic treatment is performed on the thermal insulation material obtained in the example 19. The hydrophobic treatment includes introducing the gas-phase hydrophobic reagent into the prepared thermal insulation material. After standing for a period of time, the hydrophobic thermal insulation material is obtained. The outer side of the hydrophobic thermal insulation material may no longer have the structural layer.

In the operation (1) of the example 20, the reinforcing phase fibers are the single fibers that are obtained directly by loosening the fiber cluster with a length of 9mm. In the operation (2), the pressure is 3Mpa and the holding time is 270s. Before press-molding, the mixed powders are also pre-exhausted through the exhaust plate, and then press-molding is performed. In the example 20, the reinforcement layers are disposed on both sides of the thermal insulation layer, and the reinforcement layers are glass. By disposing two layers of glass on the upper and lower sides of the thermal insulation layer, respectively, and then performing the hot press-molding, the thermal insulation component is obtained.

In the operation (1) of the example 21, the reinforcing phase fibers are the single fibers with diameters of 9µm and lengths of 6mm, which are commercially available. In the operation (2), the pressure is 5Mpa and the holding time is 250s. During the press-molding process, the exhausting operation is performed through the mold with the micropores. The hydrophobic treatment is performed on the thermal insulation layer obtained in the example 21. The hydrophobic treatment includes introducing the gas-phase hydrophobic reagent into the prepared thermal insulation layer. After standing for a period of time, the hydrophobic thermal insulation layer is obtained. The encapsulation layer is disposed on the outer side of the hydrophobic thermal insulation layer, and the encapsulation layer is the PI film. By disposing the PI film on the outer side of the hydrophobic thermal insulation layer and then using the plastic encapsulation device to encapsulate the PI film on the outer side of the hydrophobic thermal insulation layer, the thermal insulation component is obtained.

In the operation (1) of the example 22, the reinforcing phase fibers are the single fibers that are obtained by loosening and crushing the fiber clusters with an initial length of 15mm. In the operation (2), the pressure is 8Mpa and the holding time is 140s. Before press-molding, the mixed powders are pre-exhausted through the exhaust plate, and then the exhausting operation is performed during the press-molding process through the mold with the micropores. In the example 22, the reflective layer is disposed on the outer side of the thermal insulation layer, and the reflective layer is the copper foil. The copper foil is bonded around the thermal insulation layer with the adhesive, to obtain the thermal insulation component.

The performance test is performed on the thermal insulation materials that are obtained by press-molding the mixed powders in the examples 16 to 22. The density uniformity test method is as follows: the large sample is cut into small pieces, the density of each piece is measured, the average value is taken, and the variation range is within ± 30kg/m³. The temperature resistance test method is as follows: under the pressure of 0.4Mpa, the heat source of 650 °C is uniformly applied on one side of the thermal insulation material; after 20 minutes, the temperature of the cold surface of the thermal insulation material is measured; and the size of the sample is 110mm × 110mm, and the size of the heat source is 100mm × 100mm. The vibration powder-shedding rate test is as follows: the vibration sieve with the frequency of 1400 rad/s and the amplitude of 3mm is used to treat the thermal insulation component for 30 minutes, and the powder-shedding rate of the thermal insulation material (the ratio of the mass of the powder shed from the thermal insulation material to the mass of the original thermal insulation material) is measured. The test results are as follows:

| **example** | **(density/ g/m³)** | **thermal conductivity coefficient at room temperature/ W/(mk)** | **temperature resistance (temperature of cold surface)** | **compression rate** | **vibration powder-shedding rate/%** |
|---|---|---|---|---|---|
| example 16 | 460 | 0.022 | 94°C | 1Mpa: 12%; 2Mpa: 21% | 3.5% |
| example 17 | 420 | 0.024 | 87°C | 1Mpa: 17%; 2Mpa: 29% | 5*%* |
| example 18 | 430 | 0.023 | 90°C | 1Mpa: 14%; 2Mpa: 24% | 4% |
| example 19 | 470 | 0.021 | 95°C | 1Mpa: 8%; 2Mpa: 17% | 3% |
| example 20 | 450 | 0.025 | 84°C | 1Mpa: 15%; 2Mpa: 24% | 4% |
| example 21 | 430 | 0.027 | 90°C | 1Mpa: 21%; 2Mpa: 31% | 5*%* |
| example 22 | 480 | 0.028 | 80°C | 1Mpa: 10%; 2Mpa: 19% | 3.5% |

### Examples 23 to 29

The examples 23 to 29 provide the thermal insulation material including the nano-powders, the reinforcing phase fibers, the infrared light-blocking agent, and the micron powders. The nano-powders are loaded on the surfaces of the reinforcing phase fibers through the hydrogen bonding and/or the electrostatic attraction. The material ratios and the material properties in the examples 23 to 29 are as follows:

| **example** | **nano-powder** | | **reinforcing phase fiber** | | **infrared light-blocking agent** | | **micron powder** | **raw material addition ratio** |
|---|---|---|---|---|---|---|---|---|
| | material | powder limitation | material | fiber limitation (diameter, length) | material | particle size of infrared light-blocking agent | material | nano-powders: reinforcing phase fibers: infrared light-blocking agent: micron powders |
| example 23 | fumed silica nano-powder | 30nm | quartz fiber | diameter 6µm, length 8mm | titanium dioxide | 5µm | white carbon black | 90: 40: 60: 30 |
| example 24 | iron oxide nano-powder | 8nm | alumina fibre | diameter 9µm, length 4mm | zinc oxide | 4µm | fumed alumina micron powder | 40: 10: 25: 10 |
| example 25 | silica aerogel nano-powder | 40nm | quartz fiber | diameter 10µm, length 13mm | zirconia | 4µm | silica fume | 80: 30: 50: 20 |
| example 26 | zirconia nano-powder | 50nm | glass fibre | diameter 18µm, length 9mm | potassium hexatitanate whisker | aspect ratio 5, diameter 1.5µm | fly ash | 45: 20: 30: 15 |
| example 27 | titanium oxide nano-powder | 30nm | high-silicon oxide fiber | diameter 10µm, length 20mm | potassium hexatitanate whisker | aspect ratio 25, diameter 3µm | silica aerogel micron powder | 60: 20: 35: 15 |
| example 28 | zirconia aerogel nano-powder | 10nm | quartz fiber | diameter 15µm, length 10mm | silicon carbide | 10µm | fly ash | 40: 15: 30: 10 |
| example 29 | silica nano-powder | 5nm | aluminum silicate fiber | diameter 7µm, length 9mm | titanium dioxide | 9µm | silica fume | 90: 40: 60: 30 |

In the example 23, the content of the hydroxyl groups on the surfaces of the added fumed silica nano-powders is 2 groups/nm², and the content of the hydroxyl groups on the surfaces of the added quartz fibers is 2 groups/nm². In the example 24, the content of the hydroxyl groups on the surfaces of the added iron oxide nano-powders is 1.6 groups/nm², and the content of the hydroxyl groups on the surfaces of the added alumina fibers is 2.4 groups/nm². In the example 25, the content of the hydroxyl groups on the surfaces of the added silica aerogel nano-powders is 2.2 groups/nm², and the content of the hydroxyl groups on the surfaces of the added quartz fibers is 1.8 groups/nm². In the example 26, the content of the hydroxyl groups on the surfaces of the added zirconia nano-powders is 1.7 groups/nm², and the content of the hydroxyl groups on the surfaces of the added glass fibers is 2.4 groups/nm². In the example 27, the content of the hydroxyl groups on the surfaces of the added titanium oxide nano-powders is 1.9 groups/nm², and the content of the hydroxyl groups on the surfaces of the added high-silicon oxide fibers is 2.9 groups/nm². In the example 28, the content of the added hydroxyl groups on the surfaces of zirconia aerogel nano-powders is 1.5 groups/nm², and the content of the hydroxyl groups on the surfaces of the added quartz fibers is 2.1 groups/nm². In the example 29, the content of the hydroxyl groups on the surfaces of the added silica nano-powders is 2.3 groups/nm², and the content of the hydroxyl groups on the surfaces of the added aluminum silicate fibers is 2 groups/nm².

The preparation process of the thermal insulation material in the example 23 to 29 is as follows:
(1) weighing the nano-powders, the reinforcing phase fibers, the infrared light-blocking agent, and the micron powders; and placing the nano-powders, the reinforcing phase fibers, the infrared light-blocking agent, and the micron powders into the mixing device for dispersion and mixing, to obtain the mixed powders; and
(2) placing the mixed powders obtained in the operation (1) into the mold, and press-molding the mixed powders using the pressing device, to obtain the thermal insulation material.

In the operation (1) of the example 23, the reinforcing phase fibers are the single fibers with diameters of 6µm and lengths of 8mm, which are commercially available. In the operation (2), the pressure is 5Mpa and the holding time is 210s. During the press-molding process, the exhausting operation is performed through the mold with the micropores. The thermal insulation material obtained in the example 23 is no longer subjected to the hydrophobic treatment, and no structural layer is disposed on the outer side of its product.

In the operation (1) of the example 24, the reinforcing phase fibers are the single fibers that are obtained by loosening and crushing the fiber clusters with an initial length of 10mm. In the operation (2), the pressure is 8Mpa and the holding time is 130s. Before press-molding, the mixed powders are also pre-exhausted through the exhaust plate, and then press-molding is performed. The thermal insulation material obtained in the example 24 is encapsulated. The plastic encapsulation device or the adhesive is used to encapsulate the outer side of the thermal insulation layer, to obtain the composite thermal insulation component. The encapsulation layer may be any one of the PET film, the PI film, the PE film, the PEEK film, the PTFE film, the non-woven fabric, and the high-silicon oxide fabric.

In the operation (1) of the example 25, the reinforcing phase fibers are the single fibers that are obtained directly by loosening the fiber cluster with a length of 13mm. In the operation (2), the pressure is 15Mpa and the holding time is 80s. Before press-molding, the mixed powders are also pre-exhausted through the exhaust plate, and then press-molding is performed. The thermal insulation material obtained in the example 25 is no longer subjected to the hydrophobic treatment, and no structural layer is disposed on the outer side of its product.

In the operation (1) of the example 26, the reinforcing phase fibers are the single fibers that are obtained directly by loosening the fiber cluster with a length of 9mm. In the operation (2), the pressure is 5Mpa and the holding time is 250s. Before press-molding, the mixed powders are pre-exhausted through the exhaust plate, and then the exhausting operation is performed during the press-molding process through the mold with the micropores.

In the operation (1) of the example 27, the reinforcing phase fibers are the single fibers that are obtained by loosening and crushing the fiber clusters with an initial length of 30mm. In the operation (2), the pressure is 7Mpa and the holding time is 220s. Before press-molding, the mixed powders are pre-exhausted through the exhaust plate, and then press-molding is performed. In the example 27, the reinforcement layers are disposed on both sides of the thermal insulation layer, and the reinforcement layers are the semi-cured sheets. By placing two semi-cured sheets on the upper and lower sides of the thermal insulation layer, respectively, and then performing the hot press-molding, the thermal insulation component is obtained.

In the operation (1) of the example 28, the reinforcing phase fibers are the single fibers that are obtained directly by loosening the fiber cluster with a length of 10mm. In the operation (2), the pressure is 6Mpa and the holding time is 240s. Before press-molding, the mixed powders are pre-exhausted through the exhaust plate, and then exhausted through the mold with the microporous during the press-molding process. In the example 28, no structural layer is disposed on the outer side of the thermal insulation layer. The hydrophobic treatment is performed on the thermal insulation layer obtained in the example 12. The hydrophobic treatment includes introducing the gas-phase hydrophobic reagent into the prepared thermal insulation layer. After standing for a period of time, the hydrophobic thermal insulation material is obtained.

In the operation (1) of the example 29, the reinforcing phase fibers are the single fibers with diameters of 7µm and lengths of 9mm, which are commercially available. In the operation (2), the pressure is 4Mpa and the holding time is 260s. During the press-molding process, the exhausting operation is performed through the mold with the micropores. In the example 29, the encapsulation layer is disposed on the outer side of the thermal insulation layer, and the encapsulation layer is the high-silicon oxide fabric. The high-silicon oxide fabric is bonded around the thermal insulation layer with the adhesive, to obtain the thermal insulation component.

The performance test is performed on the thermal insulation materials that are obtained by press-molding the mixed powders in the examples 23 to 29. The density uniformity test method is as follows: the large sample is cut into small pieces, the density of each piece is measured, the average value is taken, and the variation range is within ± 30kg/m³. The temperature resistance test method is as follows: under the pressure of 0.4Mpa, the heat source of 650 °C is uniformly applied on one side of the thermal insulation material; after 20 minutes, the temperature of the cold surface of the thermal insulation material is measured; and the size of the sample is 110mm × 110mm, and the size of the heat source is 100mm × 100mm. The vibration powder-shedding rate test is as follows: the vibration sieve with the frequency of 1400 rad/s and the amplitude of 3mm is used to treat the thermal insulation component for 30 minutes, and the powder-shedding rate of the thermal insulation material (the ratio of the mass of the powder shed from the thermal insulation material to the mass of the original thermal insulation material) is measured. The test results are as follows:

| **example** | **(density/ g/m³)** | **thermal conductivity coefficient at room temperature/ W/(mk)** | **temperature resistance (temperature of cold surface)** | **compression rate** | **vibration powder-shedding rate/%** |
|---|---|---|---|---|---|
| example 23 | 520 | 0.018 | 68°C | 1Mpa: 9%; 2Mpa: 17% | 4% |
| example 24 | 460 | 0.022 | 80°C | 1Mpa: 15%; 2Mpa: 25% | 5% |
| example 25 | 430 | 0.023 | 70°C | 1MPa: 17%; 2Mpa: 26% | 4.5% |
| example 26 | 390 | 0.019 | 78°C | 1Mpa: 20%; 2Mpa: 30% | 5% |
| example 27 | 410 | 0.017 | 80°C | 1Mpa: 20%; 2Mpa: 29% | 5% |
| example 28 | 390 | 0.019 | 75°C | 1Mpa: 25%; 2Mpa: 30% | 4.5% |
| example 29 | 440 | 0.017 | 77°C | 1Mpa: 14%; 2Mpa: 23% | 4% |

### Examples 30 to 36

The examples 30 to 36 provide the thermal insulation material that is made by press-molding the mixed powders. The mixed powders include the nano-powders, the reinforcing phase fibers, the infrared light-blocking agent, the micron powders, the getter and the desiccant. The nano-powders are loaded on the surfaces of reinforcing phase fibers through the hydrogen bond and/or the electrostatic attraction. The material ratios and the material properties in the examples 30 to 36 are as follows:

| **example** | **nano-powder** | | **reinforcing phase fiber** | | **infrared light-blocking agent** | | **micron powder** | **getter** | **desiccant** | **raw material addition ratio** |
|---|---|---|---|---|---|---|---|---|---|---|
| | material | particle size | material | fiber limitation (diameter, length) | material | particle size of infrared light-blocking agent | material | material | material | nano-powders: reinforcing phase fibers: infrared light-blocking agent: micron powders: desiccant: getter |
| example 30 | fumed alumina nano-powder | 10nm | glass fibre | diameter 15µm, length 10mm | silicon carbide whisker | aspect ratio 30, diameter 0.5µm | silica fume | activated carbon | quicklime | 30: 10: 15: 8: 2: 2 |
| example 31 | zirconia aerogel nano-powder | 45nm | quartz fiber | diameter 6µm, length 4mm | silicon carbide | 5µm | fumed silica micron powder | barium-lithium alloy activator | alkali lime | 40: 15: 30: 10: 4: 3 |
| example 32 | fumed silica nano-powder | 25nm | quartz fiber | diameter 8µm, length 12mm | zirconia | 10µm | fumed alumina micron powder | magnesiu m oxide | anhydrous calcium chloride | 80: 30: 50: 20: 8: 8 |
| example 33 | fumed silica nano-powder | 20nm | glass fibre | diameter 14µm; length 20mm | silicon carbide | 8µm | silica fume | activated carbon | anhydrous calcium chloride | 30: 0.5: 5: 5: 1: 1 |
| example 34 | fumed silica nano-powder | 40nm | aluminum silicate fiber | diameter 3µm, length 15mm | zirconia | 10µm | silica fume | calcium oxide | alkali lime | 55: 20: 30: 15: 4: 5 |
| example 35 | fumed alumina nano-powder | 8nm | alumina fibre | diameter 1µm, length 4mm | zinc oxide | 2µm | white carbon black | silica gel | anhydrous calcium chloride | 40: 10: 25: 10: 3: 3 |
| example 36 | iron oxide nano-powder | 30nm | glass fibre | diameter 12µm, length 10mm | potassium hexatitanate whisker | aspect ratio 28, diameter 2µm | fumed alumina micron powder | silica gel | quicklime | 45: 20: 30: 15: 5: 4 |

In the example 30, the content of the hydroxyl groups on the surfaces of the added fumed alumina nano-powders is 1.4 groups/nm², and the content of the hydroxyl groups on the surfaces of the added glass fibers is 3 groups/nm². In the example 31, the content of the hydroxyl groups on the surfaces of the added zirconia aerogel nano-powders is 2.4 groups/nm², and the content of the hydroxyl groups on the surfaces of the added quartz fibers is 2.6 groups/nm². In the example 32, the content of the hydroxyl groups on the surfaces of the added fumed silica nano-powders is 1.8 groups/nm², and the content of the hydroxyl groups on the surfaces of the added quartz fibers is 2.2 groups/nm². In the example 33, the content of the hydroxyl groups on the surfaces of the added fumed silica nano-powders is 1.2 groups/nm², and the content of the hydroxyl groups on the surfaces of the added glass fibers is 1.9 groups/nm². In the example 34, the content of the hydroxyl groups on the surfaces of the added fumed silica nano-powders is 2.1 groups/nm², and the content of the hydroxyl groups on the surfaces of the added aluminum silicate fibers is 2.4 groups/nm². In the example 35, the content of the hydroxyl groups on the surfaces of the added fumed alumina nano-powders is 1.6 groups/nm², and the content of the hydroxyl groups on the surfaces of the added alumina fibers is 2.1 groups/nm². In the example 36, the content of the hydroxyl groups on the surfaces of the added iron oxide nano-powders is 1.7 groups/nm², and the content of the hydroxyl groups on the surfaces of the added glass fibers is 2.4 groups/nm².

The preparation process of the thermal insulation material in the examples 30-36 is as follows:
(1) weighing the nano-powders, the reinforcing phase fibers, the infrared light-blocking agent, the micron powders, the getter, and the desiccant; and placing the nano-powders, the reinforcing phase fibers, the infrared light-blocking agent, the micron powders, the getter, and the desiccant into the mixing device for dispersion and mixing, to obtain the mixed powders; and
(2) placing the mixed powders obtained in the operation (1) into the mold, and press-molding the mixed powders using the pressing device, to obtain the thermal insulation material.

In the operation (1) of the example 30, the reinforcing phase fibers are the single fibers that are obtained by loosening and crushing the fiber clusters with an initial length of 15mm. In the operation (2), the pressure is 2Mpa and the holding time is 280s. During the press-molding process, the exhausting operation is performed through the mold with the micropores.

In the operation (1) of the example 31, the reinforcing phase fibers are the single fibers with diameters of 6µm and lengths of 4mm, which are commercially available. In the operation (2), the pressure is 10Mpa and the holding time is 190s. Before press-molding, the mixed powders are pre-exhausted through the exhaust plate, and then the exhausting operation is performed during the press-molding process through the mold with the micropores.

In the operation (1) of the example 32, the reinforcing phase fibers are the single fibers that are obtained by loosening and crushing the fiber clusters with an initial length of 20mm. In the operation (2), the pressure is 20Mpa and the holding time is 10s. Before press-molding, the mixed powders are pre-exhausted through the exhaust plate, and then the exhausting operation is performed during the press-molding process through the mold with the micropores.

In the operation (1) of the example 33, the reinforcing phase fibers are the single fibers that are obtained directly by loosening the fiber cluster with the length of 20mm. In the operation (2), the pressure is 10Mpa and the holding time is 180s. Before press-molding, the mixed powders are pre-exhausted through the exhaust plate, and then exhausted through the mold with the microporous during the press-molding process.

In the operation (1) of the example 34, the reinforcing phase fibers are the single fibers that are obtained by loosening and crushing the fiber clusters with an initial length of 23mm. In the operation (2), the pressure is 18Mpa and the holding time is 60s. Before press-molding, the mixed powders are also pre-exhausted through the exhaust plate, and then press-molding is performed.

In the operation (1) of the example 35, the reinforcing phase fibers are the single fibers with diameters of 1µm and lengths of 4mm, which are commercially available. In the operation (2), the pressure is 6Mpa and the holding time is 160s. Before press-molding, the mixed powders are pre-exhausted through the exhaust plate, and then press-molding is performed.

In the operation (1) of the example 36, the reinforcing phase fibers are the single fibers that are obtained by loosening and crushing the fiber clusters with an initial length of 15mm. In the operation (2), the pressure is 8Mpa and the holding time is 200s. During the press-molding process, the exhausting operation is performed through the mold with the micropores.

The mixed powders in the examples 30-36 includes the getter and the desiccant. Due to the selection of the raw materials, the product form adopts an encapsulated form, that is, the encapsulation layer is disposed on the outer side of the thermal insulation layer, and the composite thermal insulation component is obtained by encapsulating the outer side of the thermal insulation layer with the plastic encapsulation device or the adhesive. The encapsulation layer is any one of the PET film, the PI film, the PE film, the PEEK film, the PTFE film, the non-woven fabric, and the high-silicon oxide fabric. In the example 18, the thermal insulation material is subjected to the hydrophobic treatment. The hydrophobic treatment includes introducing the gas-phase hydrophobic reagent into the prepared thermal insulation material. After standing for a period of time, the hydrophobic thermal insulation material is obtained. The outer side of the hydrophobic thermal insulation material is encapsulated.

Due to the addition of the getter and the desiccant in the raw materials, the thermal insulation material prepared in the examples 30 to 36 may be encapsulated. Due to the presence of the encapsulation layer, the vibration powder-shedding rate of the thermal insulation material after encapsulation is 0. Therefore, the vibration powder-shedding rate is not measured in the examples 30 to 36. Other performance tests may be performed on the thermal insulation material obtained by press-molding the mixed powders. The density uniformity test method is as follows: the large sample is cut into small pieces, the density of each piece is measured, the average value is taken, and the variation range is within ± 30kg/m³. The temperature resistance test method is as follows: under the pressure of 0.4Mpa, the heat source of 650°C is uniformly applied on one side of the thermal insulation material; after 20 minutes, the temperature of the cold surface of the thermal insulation material is measured; and the size of the sample is 110mm × 110mm, and the size of the heat source is 100mm × 100mm. The test results are as follows:

| **example** | **(density/ g/m³)** | **thermal conductivity coefficient at room temperature/ W/(mk)** | **temperature resistance (temperature of cold surface)** | **compression rate** |
|---|---|---|---|---|
| example 30 | 400 | 0.024 | 85°C | 1Mpa: 11%; 2Mpa: 20% |
| example 31 | 430 | 0.023 | 82°C | 1Mpa: 9%; 2Mpa: 20% |
| example 32 | 480 | 0.022 | 80°C | 1Mpa: 6%; 2Mpa: 16% |
| example 33 | 420 | 0.022 | 95°C | 1Mpa: 12%; 2Mpa: 22% |
| example 34 | 460 | 0.023 | 90°C | 1Mpa: 8%; 2Mpa: 19% |
| example 35 | 480 | 0.019 | 87°C | 1Mpa: 5%; 2Mpa: 16% |
| example 36 | 400 | 0.022 | 89°C | 1Mpa: 15%; 2Mpa: 25% |

In some embodiments, the hydrophobic reagent includes any one or more of hydrophobic alkoxysilanes, hexamethyldisiloxane, and hexamethyldisilazane. In some embodiments, the hydrophobic reagents include any one or more of methyltrimethoxysilane, methyltriethoxysilane, ethyltrimethoxysilane, ethyltriethoxysilane, propyltrimethoxysilane, chloropropyltriethoxysilane, chloropropyltrimethoxysilane, chloropropylmethyldimethoxysilane, dimethyldimethoxysilane, dimethyldiethoxysilane, diethyldimethoxysilane, diethyldiethoxysilane, trimethylchlorosilane, hexamethyldisiloxane, and hexamethyldisilazane. The gas-phase hydrophobic reagent is obtained by heating and vaporizing the liquid hydrophobic reagent.

### Examples 37 to 40

The examples 37 to 40 provide the thermal insulation material including the nano-powders and a reinforcing phase material. The material ratios and the material properties in the examples 37 to 40 are as follows:

| **example** | **nano-powder** | | **reinforcing phase material** | | | **raw material addition ratio** |
|---|---|---|---|---|---|---|
| | material | powder limitation | reinforcing phase inorganic fiber | fiber limitation (diameter, length) | reinforcing phase organic material | |
| example 37 | fumed silica nano-powder | 30nm | alumina fibre | diameter 8µm, length 10mm | / | nano-powders: reinforcing phase inorganic fibers = 60: 20 |
| example 38 | silica aerogel nano-powder | 50nm | high-silicon oxide fiber | diameter 1 µm, length 4mm | starch | nano-powders: reinforcing phase |
| | | | | | | inorganic fibers: reinforcing phase organic material = 40: 8: 2 |
| example 39 | fumed alumina nano-powder | 10nm | quartz fiber | diameter 14µm, length 12mm | polyamide fiber | nano-powders: reinforcing phase |
| | | | | | | inorganic fibers: reinforcing phase organic material = 60: 35: 5 |
| example 40 | fumed silica nano-powder | 5nm | glass fibre | diameter 8µm, length 9mm | / | nano-powders: reinforcing phase inorganic fibers = 70: 30 |

The preparation process of the thermal insulation material in the examples 37 to 40 is as follows:
(1) weighing each raw material, bonding an appropriate amount of ethanol on the surfaces of the nano-powders by atomization, and dispersing and mixing the raw materials by the airflow dispersion sedimentation, to obtain the mixed powders; and
(2) placing the mixed powders into the mold, and allowing the needle to repeatedly move up and down in the mold containing the mixed powders, so that the fibers distribution is disrupted, and the reinforcing phase inorganic fibers and/or the reinforcing phase organic fibers in the mixed powders change from the horizontal direction to other directions; and then press-molding the thermal insulation material using the pressing device.

In the operation (1) of the example 37, the reinforcing inorganic fibers in the raw material are the single fibers with diameters of 8µm and lengths of 10mm, which are commercially available. In the operation (2), the molding pressure is 10Mpa and the holding time is 150s. Before press-molding, the mixed powders are pre-exhausted through the exhaust plate, and then press-molding is performed. The hydrophobic treatment is performed on the thermal insulation material obtained in the example 37. The hydrophobic treatment includes immersing the prepared thermal insulation material in the hydrophobic reagent, followed by drying to obtain the hydrophobic thermal insulation material. No structural layer is disposed on the outer side of the hydrophobic thermal insulation material.

In the operation (1) of the example 38, the reinforcing inorganic fibers in the raw material are the single fibers that are obtained by loosening and crushing the fiber clusters with an initial length of 10mm. In the operation (2), the molding pressure is 0.5Mpa and the holding time is 300s. During the press-molding process, the exhausting operation is performed through the mold with the micropores. The thermal insulation material obtained in the example 38 is encapsulated and sealed on the outer side of the thermal insulation material using the plastic sealing device or the adhesive, to obtain the encapsulated thermal insulation component. The encapsulation layer may be any one of the PET film, the PI film, the PE film, the PEEK film, the PTFE film, the non-woven fabric, and the high-silicon oxide fabric.

In the operation (1) of the example 39, the reinforcing phase inorganic fibers in the raw material are the single fibers that are obtained directly by loosening the fiber cluster with a length of 12mm. In the operation (2), the molding pressure is 20Mpa and the holding time is 10s. Before press-molding, the mixed powders are pre-exhausted through the exhaust plate, and then the press-molding is performed. The hydrophobic treatment is performed on the thermal insulation material obtained in the example 39. The hydrophobic treatment includes introducing the gas-phase hydrophobic reagent into the prepared thermal insulation material. After standing for a period of time, the hydrophobic thermal insulation material is obtained. The soft reinforcement layer is disposed on the outer side of the hydrophobic thermal insulation material, and the high-silicon oxide fabric or the non-woven fabric is bonded around the thermal insulation material with the adhesive, to obtain the composite thermal insulation component.

In the operation (1) of the example 40, the reinforcing inorganic fibers in the raw material are the single fibers that are obtained by loosening and crushing the fiber clusters with an initial length of 15mm. In the operation (2), the molding pressure is 5Mpa and the holding time is 220s. During the press-molding process, the exhausting operation is performed through the mold with the micropores. The thermal insulation material obtained in the example 40 is no longer subjected to the hydrophobic treatment, and no structural layer is disposed on the outer side of its product.

The performance test is performed on the thermal insulation materials that are obtained by press-molding the mixed powders in the examples 37 to 40. The density uniformity test method is as follows: the large sample is cut into small pieces, the density of each piece is measured, the average value is taken, and the variation range is within ± 30kg/m³. The temperature resistance test method is as follows: under the pressure of 0.4Mpa, the heat source of 650 °C is uniformly applied on one side of the thermal insulation material; after 20 minutes, the temperature of the cold surface of the thermal insulation material is measured; and the size of the sample is 110mm × 110mm, and the size of the heat source is 100mm × 100mm. The vibration powder-shedding rate test is as follows: the vibration sieve with the frequency of 1400 rad/s and the amplitude of 3mm is used to treat the thermal insulation component for 30 minutes, and the powder-shedding rate of the thermal insulation material (the ratio of the mass of the powder shed from the thermal insulation material to the mass of the original thermal insulation material) is measured. The test results are as follows:

| **example** | **(density/ g/m³)** | **thermal conductivity coefficient at room temperature/ W/(mk)** | **temperature resistance (temperature of cold surface)** | **compression rate** | **vibration powder-shedding rate/%** |
|---|---|---|---|---|---|
| example 37 | 450 | 0.017 | 79°C | 1Mpa: 17%; 2Mpa: 28% | 4.5% |
| example 38 | 550 | 0.022 | 80°C | 1Mpa: 6%; 2Mpa: 16% | 3.5% |
| example 39 | 520 | 0.019 | 75°C | 1Mpa: 9%; 2Mpa: 18% | 4% |
| example 40 | 480 | 0.020 | 77°C | 1Mpa: 15%; 2Mpa: 25% | 4.5% |

### Examples 41 to 43

The examples 41 to 43 provide the thermal insulation material including the nano-powders, the reinforcing phase material and the infrared light-blocking agent. The material ratios and the material properties in the examples 41 to 43 are as follows:

| **example** | **nano-powder** | | **reinforcing phase material** | | | **infrared light-blocking agent** | | **raw material addition ratio** |
|---|---|---|---|---|---|---|---|---|
| | material | powder limitation | reinforcing phase inorganic fiber | fiber limitation (diameter, length) | reinforcing phase organic material | material | particle size of infrared light-blocking agent | |
| example 41 | fumed silica nano-powder | 30nm | glass fibre | diameter 8µm, length 12mm | / | silicon carbide | 7µm | nano-powders: reinforcing phase |
| | | | | | | | | inorganic fibers: infrared light-blocking agent = 25: 0.5: 5 |
| example 42 | zirconia nano-powder | 15nm | high-silicon oxide fiber | diameter 7µm, length 13mm | starch | potassium hexatitanate whisker | aspect ratio 5, diameter 5µm | nano-powders: reinforcing phase |
| | | | | | | | | inorganic fibers: reinforcing phase |
| | | | | | | | | organic material: infrared light-blocking agent = 90: 35: 5: 60 |
| example 43 | alumina aerogel nano-powder | 8nm | alumina fibre | diameter 6µm, length 11mm | / | zinc oxide | 10µm | nano-powders: reinforcing phase |
| | | | | | | | | inorganic fibers: infrared light-blocking agent = 40: 15: 20 |

The preparation process of the thermal insulation materials in the examples 41 to 43 is as follows:
(1) weighing each raw material, bonding an appropriate amount of propanol on the surfaces of the nano-powders by atomization, and dispersing and mixing the raw materials by the airflow dispersion sedimentation, to obtain the mixed powders; and
(2) placing the mixed powders into the mold and allowing the needle to repeatedly move up and down in the mold containing the mixed powders, so that the fibers distribution is disrupted, and the reinforcing phase fibers in the mixed powders change from the horizontal direction to other directions; and then press-molding the thermal insulation material by using the pressing device.

In the operation (1) of the example 41, the reinforcing inorganic fibers in the raw material are the single fibers that are obtained by loosening and crushing the fiber clusters with an initial length of 18mm. In the operation (2), the molding pressure is 8Mpa and the holding time is 180s. Before press-molding, the mixed powders are pre-exhausted through the exhaust plate and then exhausted during the press-molding process through the mold with the micropores. The hydrophobic treatment is performed on the thermal insulation material obtained in the example 41. The hydrophobic treatment includes introducing the gas-phase hydrophobic reagent into the prepared thermal insulation material. After standing for a period of time, the hydrophobic thermal insulation material is obtained. The hydrophobic thermal insulation material is encapsulated by using the plastic sealing device or the adhesive. The outer side of the hydrophobic thermal insulation material is encapsulated, so that the encapsulated thermal insulation component is obtained. The encapsulation layer may be any one of the PET film, the PI film, the PE film, the PEEK film, the PTFE film, the non-woven fabric, and the high-silicon oxide fabric.

In the operation (1) of the example 42, the reinforcing phase inorganic fibers in the raw material are the single fibers that are obtained directly by loosening the fiber cluster with the length of 13mm. In the operation (2), the molding pressure is 6Mpa and the holding time is 200s. Before the press-molding, the mixed powders are also pre-exhausted through the exhaust plate, and then the press-molding is performed. The hard reinforcement layer is disposed on the outer side of the thermal insulation material obtained in the example 42. By placing two hard reinforcement layers on the upper and lower sides of the thermal insulation layer, respectively, and then performing the hot press-molding, the thermal insulation component is obtained. The material of the hard reinforcement layer may be any one of the resin plate, the rubber sheet, the glass, and the semi-cured sheet.

In the operation (1) of the example 43, the reinforcing inorganic fibers in the raw material are the single fibers with diameters of 6µm and lengths of 11mm, which are commercially available. In the operation (2), the molding pressure is 15Mpa and the holding time is 80. During the press-molding process, the exhausting operation is performed through the mold with the micropores. The thermal insulation material obtained in the example 43 is no longer subjected to the hydrophobic treatment, and no structural layer is disposed on the outer side of its product.

The performance test is performed on the thermal insulation materials that are obtained by press-molding the mixed powders in the examples 41 to 43. The density uniformity test method is as follows: the large sample is cut into small pieces, the density of each piece is measured, the average value is taken, and the variation range is within ± 30kg/m³. The temperature resistance test method is as follows: under the pressure of 0.4Mpa, the heat source of 650 °C is uniformly applied on one side of the thermal insulation material; after 20 minutes, the temperature of the cold surface of the thermal insulation material is measured; and the size of the sample is 110mm × 110mm, and the size of the heat source is 100mm × 100mm. The vibration powder-shedding rate test is as follows: the vibration sieve with the frequency of 1400 rad/s and the amplitude of 3mm is used to treat the thermal insulation component for 30 minutes, and the powder-shedding rate of the thermal insulation material (the ratio of the mass of the powder shed from the thermal insulation material to the mass of the original thermal insulation material) is measured. The test results are as follows:

| **example** | **(density/ g/m³)** | **thermal conductivity coefficient at room temperature/ W/(mk)** | **temperature resistance (temperature of cold surface)** | **compression rate** | **vibration powder-shedding rate/%** |
|---|---|---|---|---|---|
| example 41 | 510 | 0.025 | 70°C | 1Mpa: 12%; 2Mpa: 21% | 4% |
| example 42 | 540 | 0.023 | 75°C | 1Mpa: 6%; 2Mpa: 15% | 3% |
| example 43 | 530 | 0.025 | 68°C | 1Mpa: 10%; 2Mpa: 20% | 3% |

### Examples 44 to 46

The examples 44 to 46 provide the thermal insulation material including the nano-powders, the reinforcing phase material, and the micron powders. The material ratios and the material properties in the examples 44 to 46 are as follows:

| **example** | **nano-powder** | | **reinforcing phase fiber** | | | **micron powder** | **raw material addition ratio** |
|---|---|---|---|---|---|---|---|
| | material | powder limitation (particle size) | reinforcing phase inorganic fiber | fiber limitation (diameter, length) | reinforcing phase organic material | material | |
| example 44 | fumed silica nano-powder | 10nm | glass fibre | diameter 5µm, length 9mm | / | silica fume | nano-powders: reinforcing phase inorganic fibers: micron powders = 25: 1: 0.5 |
| example 45 | titanium oxide nano-powder | 30nm | aluminum silicate fiber | diameter 15µm, length 20mm | / | fumed silica micron powder | nano-powders: reinforcing phase inorganic fibers: micron powders = 55: 20: 15 |
| example 46 | zirconia aerogel nano-powder | 50nm | glass fibre | diameter 4µm, length 6mm | polyester fiber | diatomite | nano-powders: reinforcing phase inorganic fibers: reinforcing phase organic material: micron powders = 50: 17: 3: 15 |

The preparation process of the thermal insulation materials in the examples 44 to 46 is as follows:
(1) weighing each raw material, bonding an appropriate amount of butanol on the surfaces of the nano-powders by atomization, and dispersing and mixing the raw materials by the airflow dispersion sedimentation, to obtain the mixed powders; and
(2) placing the mixed powders into the mold, and allowing the needle to repeatedly move up and down in the mold containing the mixed powders, so that the fibers distribution is disrupted, and the reinforcing phase fibers in the mixed powders change from the horizontal direction to other directions; and then press-molding the thermal insulation material using the pressing device.

In the operation (1) of the example 44, the reinforcing inorganic fibers in the raw material are the single fibers that are obtained by loosening and crushing the fiber clusters with an initial length of 15mm. In the operation (2), the molding pressure is 18Mpa and the holding time is 40s. Before press-molding, the mixed powders are pre-exhausted through the exhaust plate and then exhausted during the press-molding process through the mold with the micropores. The hydrophobic treatment is performed on the thermal insulation material obtained in the example 44. The hydrophobic treatment includes introducing the gas-phase hydrophobic reagent into the prepared thermal insulation material. After standing for a period of time, the hydrophobic thermal insulation material is obtained. No structural layer is disposed on the outer side of the hydrophobic thermal insulation material.

In the operation (1) of the example 45, the reinforcing phase inorganic fibers in the raw material are the single fibers that are obtained directly by loosening the fiber cluster with the length of 20mm. In the operation (2), the molding pressure is 16Mpa and the holding time is 60s. During the press-molding process, the exhausting operation is performed through the mold with the micropores. The reflective layer is disposed on the outer side of the thermal insulation material in the example 45, and the reflective layer is the aluminum foil, the aluminum foil fabric, or the copper foil. The reflective layer is bonded around the thermal insulation layer with the adhesive, to obtain the composite thermal insulation component.

In the operation (1) of the example 46, the reinforcing inorganic fibers in the raw material are the single fibers with diameters of 4µm and lengths of 6mm, which are commercially available. In the operation (2), the molding pressure is 10Mpa and the holding time is 150s. Before press-molding, the mixed powders are pre-exhausted through the exhaust plate and then exhausted during the press-molding process through the mold with the micropores. The thermal insulation material obtained in the example 46 is no longer subjected to the hydrophobic treatment, and no structural layer is disposed on the outer side of its product.

The performance test is performed on the thermal insulation materials that are obtained by press-molding the mixed powders in the examples 44 to 46. The density uniformity test method is as follows: the large sample is cut into small pieces, the density of each piece is measured, the average value is taken, and the variation range is within ± 30kg/m³. The temperature resistance test method is as follows: under the pressure of 0.4Mpa, the heat source of 650 °C is uniformly applied on one side of the thermal insulation material; after 20 minutes, the temperature of the cold surface of the thermal insulation material is measured; and the size of the sample is 110mm × 110mm, and the size of the heat source is 100mm × 100mm. The vibration powder-shedding rate test is as follows: the vibration sieve with the frequency of 1400 rad/s and the amplitude of 3mm is used to treat the thermal insulation component for 30 minutes, and the powder-shedding rate of the thermal insulation material (the ratio of the mass of the powder shed from the thermal insulation material to the mass of the original thermal insulation material) is measured. The test results are as follows:

| **example** | **(density/ g/m³)** | **thermal conductivity coefficient at room temperature/ W/(mk)** | **temperature resistance (temperature of cold surface)** | **compression rate** | **vibration powder-shedding rate/%** |
|---|---|---|---|---|---|
| example 44 | 400 | 0.023 | 110°C | 1Mpa: 13%; 2Mpa: 21% | 3.5% |
| example 45 | 430 | 0.024 | 100°C | 1Mpa: 14%; 2Mpa: 25%; | 4% |
| example 46 | 450 | 0.022 | 120°C | 1Mpa: 10%; 2Mpa: 21% | 3.5% |

### Examples 47 to 49

The examples 47 to 49 provide the thermal insulation material including the nano-powders, the reinforcing phase material, the infrared light-blocking agent, and the micron powders. The material ratios and the material properties in the examples 47 to 49 are as follows:

| **example** | **nano-powder** | | **reinforcing phase material** | | | **infrared light-blocking agent** | | **micron powder** | **raw material addition ratio** |
|---|---|---|---|---|---|---|---|---|---|
| | material | powder limitation (particle size) | reinforcing phase inorganic fiber | fiber limitation (diameter, length) | reinforcing phase organic material | material | particle size of infrared light-blocking agent | material | |
| example 47 | fumed silica nano-powder | 35nm | glass fibre | diameter 20µm, length 15mm | / | silicon carbide | 2µm | white carbon black | nano-powders: reinforcing phase inorganic fibers: infrared light-blocking agent: micron powders = 25: 0.5: 5: 0.5 |
| example 48 | fumed alumina nano-powder | 5nm | glass fibre | diameter 1µm, length 4mm | starch | silicon carbide whisker | aspect ratio 30, diameter 1µm | alumina aerogel micron powder | nano-powders: reinforcing phase inorganic fibers: reinforcing phase organic material: infrared light-blocking agent: micron powders = 30:10:14:1:8 |
| example 49 | iron oxide nano-powder | 15nm | aluminum silicate fiber | diameter 15µm, length 6mm | / | zirconia | 8µm | silica aerogel micron powder | nano-powders: reinforcing phase inorganic fibers: infrared light-blocking agent: micron powders = 55: 20: 30: 10 |

The preparation process of the thermal insulation material in the examples 47 to 49 is as follows:
(1) weighing each raw material, bonding an appropriate amount of ethanol on the surfaces of the nano-powders by atomization, and dispersing and mixing the raw materials by the airflow dispersion sedimentation, to obtain the mixed powders; and
(2) placing the mixed powders into the mold, and allowing the needle to repeatedly move up and down in the mold containing the mixed powders, so that the fibers distribution is disrupted, and the reinforcing phase fibers in the mixed powders change from the horizontal direction to other directions; and then press-molding the thermal insulation material using the pressing device.

In the operation (1) of the example 47, the reinforcing phase inorganic fibers in the raw material are the single fibers that are obtained directly by loosening the fiber cluster with a length of 25mm. In the operation (2), the molding pressure is 15Mpa and the holding time is 80s. During the press-molding process, the exhausting operation is performed through the mold with the micropores. The thermal insulation material obtained in the example 47 is no longer subjected to the hydrophobic treatment, and no structural layer is disposed on the outer side of its product.

In the operation (1) of the example 48, the reinforcing inorganic fibers in the raw material are the single fibers with diameters of 1µm and lengths of 4mm, which are commercially available. In the operation (2), the molding pressure is 12Mpa and the holding time is 120s. Before press-molding, the mixed powders are pre-exhausted through the exhaust plate, and then the press-molding is performed. The hydrophobic treatment is performed on the thermal insulation material obtained in the example 48. The hydrophobic treatment includes introducing the gas-phase hydrophobic reagent into the prepared thermal insulation material. After standing for a period of time, the hydrophobic thermal insulation material is obtained.

In the operation (1) of the example 49, the reinforcing inorganic fibers in the raw material are the single fibers that are obtained by loosening and crushing the fiber clusters with an initial length of 6mm. In the operation (2), the molding pressure is 14Mpa and the holding time is 100s. Before press-molding, the mixed powders are pre-exhausted through the exhaust plate, and then the press-molding is performed. The thermal insulation material obtained in the example 49 is no longer subjected to the hydrophobic treatment, and no structural layer is disposed on the outer side of its product.

The performance test is performed on the thermal insulation materials that are obtained by press-molding the mixed powders in the examples 47 to 49. The density uniformity test method is as follows: the large sample is cut into small pieces, the density of each piece is measured, the average value is taken, and the variation range is within ± 30kg/m³. The temperature resistance test method is as follows: under the pressure of 0.4Mpa, the heat source of 650 °C is uniformly applied on one side of the thermal insulation material; after 20 minutes, the temperature of the cold surface of the thermal insulation material is measured; and the size of the sample is 110mm × 110mm, and the size of the heat source is 100mm × 100mm. The vibration powder-shedding rate test is as follows: the vibration sieve with the frequency of 1400 rad/s and the amplitude of 3mm is used to treat the thermal insulation component for 30 minutes, and the powder-shedding rate of the thermal insulation material (the ratio of the mass of the powder shed from the thermal insulation material to the mass of the original thermal insulation material) is measured. The test results are as follows:

| **example** | **(density/ g/m³)** | **thermal conductivity coefficient at room temperature/ W/(mk)** | **temperature resistance (temperature of cold surface)** | **compression rate** | **vibration powder-shedding rate/%** |
|---|---|---|---|---|---|
| example 47 | 400 | 0.018 | 80°C | 1Mpa: 19%; 2Mpa: 30% | 3% |
| example 48 | 430 | 0.022 | 75°C | 1Mpa: 10%; 2Mpa: 21% | 3% |
| example 49 | 410 | 0.018 | 75°C | 1Mpa: 13%; 2Mpa: 22% | 4% |

### Examples 50 to 52

The examples 50 to 52 provide the thermal insulation material that is obtained by press-molding the mixed powders. The mixed powders include the nano-powders, the reinforcing phase material, the infrared light-blocking agent, the micron powders, the getter, and the desiccant. The material ratios and the material properties in the examples 50 to 52 are as follows:

| **example** | **nano-powder** | | **reinforcing phase material** | | | **infrared light-blocking agent** | | **micron powder** | **getter** | **desiccant** | **raw material addition ratio** |
|---|---|---|---|---|---|---|---|---|---|---|---|
| | materi al | powder limitatio n (particl e size) | reinforcin g phase inorganic fiber | fiber limitatio n (diamete r, length) | reinforcing phase organic material | material | particle size of infrared light-blocking agent | material | material | material | |
| example 50 | fumed silica nano-powde r | 25nm | quartz fiber | diameter 6µm, length 8mm | polyethylene fiber | titanium dioxide | 6µm | diatomit e | barium-lithium alloy activator | quicklime | nano-powders: reinforcing phase inorganic fibers: infrared light-blocking agent: micron powders: desiccant: getter=90: 40: 60: 30: 10: 10 |
| example 51 | fumed alumin a nano-powde r | 8nm | high-silicon oxide fiber | diameter 9µm, length 6mm | / | potassium hexatitanat e whisker | aspect ratio 15, diameter 3µm | fly ash | magnesiu m oxide | solid sodium hydroxide | nano-powders: reinforcing phase inorganic fibers: infrared light-blocking agent: micron powders: desiccant: getter=60: 20: 35: 15: 5: 5 |
| example 52 | zirconi a nano-powde r | 15nm | aluminum silicate fiber | diameter 12µm, length 12mm | / | titanium dioxide | 8µm | silica aerogel micron powder | calcium oxide | solid sodium hydroxide | nano-powders: reinforcing phase inorganic fibers: infrared light-blocking agent: micron powders: desiccant: getter=50: 20: 30: 15: 5: 4 |

The preparation process of the thermal insulation materials in the examples 50 to 52 is as follows:
(1) weighing each raw material, bonding an appropriate amount of butanol on the surfaces of the nano-powders by atomization, and dispersing and mixing the raw materials by the airflow dispersion sedimentation, to obtain mixed powder; and
(2) placing the mixed powders into the mold, and allowing the needle to repeatedly move up and down in the mold containing the mixed powders, so that the fibers distribution is disrupted, and the reinforcing phase fibers in the mixed powders change from the horizontal direction to other directions; and then press-molding the thermal insulation material using the pressing device.

In the operation (1) of the example 50, the reinforcing inorganic fibers in the raw material are the single fibers with diameters of 6µm and lengths of 8mm, which are commercially available. In the operation (2), the molding pressure is 10Mpa and the holding time is 150s. Before press-molding, the mixed powders are pre-exhausted through the exhaust plate and then exhausted during the press-molding process through the mold with the micropores.

In the operation (1) of the example 51, the reinforcing phase inorganic fibers in the raw material are the single fibers that are obtained directly by loosening the fiber cluster with a length of 15mm. In the operation (2), the molding pressure is 5Mpa and the holding time is 220s. Before press-molding, the mixed powders are pre-exhausted through the exhaust plate, and then the press-molding is performed.

In the operation (1) of the example 52, the reinforcing inorganic fibers in the raw material are the single fibers that are obtained by loosening and crushing the fiber clusters with an initial length of 12mm. In the operation (2), the molding pressure is 15Mpa and the holding time is 80s. Before press-molding, the mixed powders are pre-exhausted through the exhaust plate and then exhausted during the press-molding process through the mold with the micropores.

The mixed powders in the examples 50-52 include the getter and the desiccant. Due to the selection of the raw materials, the product form adopts the encapsulated form, that is, the encapsulation layer is disposed on the outer side of the thermal insulation layer, and the composite thermal insulation component is obtained by encapsulating the outer side of the thermal insulation layer with the plastic encapsulation device or the adhesive. The encapsulation layer is any one of the PET film, the PI film, the PE film, the PEEK film, the PTFE film, the non-woven fabric, and the high-silicon oxide fabric.

Due to the addition of the getter and the desiccant in the raw materials, the thermal insulation material prepared in the examples 50 to 52 may be encapsulated. Due to the presence of the encapsulation layer, the vibration powder-shedding rate of the thermal insulation composite product after encapsulation is 0. Therefore, the vibration powder-shedding rate is not measured in the examples 30 to 36.

The performance test is performed on the thermal insulation materials that are obtained by press-molding the mixed powders in the examples 50 to 52. The density uniformity test method is as follows: the large sample is cut into small pieces, the density of each piece is measured, the average value is taken, and the variation range is within ± 30kg/m³. The temperature resistance test method is as follows: under the pressure of 0.4Mpa, the heat source of 650°C is uniformly applied on one side of the thermal insulation material; after 20 minutes, the temperature of the cold surface of the thermal insulation material is measured; and the size of the sample is 110mm × 110mm, and the size of the heat source is 100mm × 100mm. The test results are as follows:

| **example** | **density/ g/m³** | **thermal conductivity coefficient at room temperature/ W/(mk)** | **temperature resistance (temperature of cold surface)** | **compression rate** |
|---|---|---|---|---|
| example 50 | 450 | 0.022 | 90°C | 1Mpa: 8%; 2Mpa: 19% |
| example 51 | 430 | 0.024 | 87°C | 1Mpa: 10%; 2Mpa: 20% |
| example 52 | 400 | 0.023 | 85°C | 1Mpa: 13%; 2Mpa: 24% |

In some embodiments, the reinforcing phase inorganic fibers and/or the reinforcing phase organic fibers in the mixed powders may be magnetic fibers. During the preparation of the thermal insulation material, the directions of the reinforcing phase inorganic fibers and/or the directions of the reinforcing phase organic fibers in the mixed powders may be changed by a magnetic field, thereby increasing entanglement points between the fibers. For these magnetic fibers, the preparation method includes adding magnetic substances during the fiber preparation process, so that the magnetic fibers are obtained.

In some embodiments, the reinforcing phase inorganic fibers and/or the reinforcing phase organic fibers in the mixed powders may be conductive fibers. In the preparation process of the thermal insulation material, the directions of the reinforcing phase inorganic fibers and/or the directions of the reinforcing phase organic fibers in the mixed powders may be changed by an electric field, thereby increasing the entanglement points between the fibers.

In some embodiments, the hydrophobic reagent includes any one or more of hydrophobic alkoxysilanes, hexamethyldisiloxane, and hexamethyldisilazane. In some embodiments, the hydrophobic reagents include any one or more of methyltrimethoxysilane, methyltriethoxysilane, ethyltrimethoxysilane, ethyltriethoxysilane, propyltrimethoxysilane, chloropropyltriethoxysilane, chloropropyltrimethoxysilane, chloropropylmethyldimethoxysilane, dimethyldimethoxysilane, dimethyldiethoxysilane, diethyldimethoxysilane, diethyldiethoxysilane, trimethylchlorosilane, hexamethyldisiloxane, and hexamethyldisilazane. The gas-phase hydrophobic reagent is obtained by heating and vaporizing the liquid hydrophobic reagent.

### Comparative example 1

The comparative example 1 provides the thermal insulation material and its preparation method. The comparative example 1 is basically the same as in the example 38 in terms of the raw materials and the preparation method. The difference is that the mixed powders in the comparative example 1 only includes the nano-powders and the reinforcing phase inorganic fibers, and no reinforcing phase organic material is added into the mixed powders. The raw material ratio of the nano-powders and the reinforcing phase inorganic fibers is 40:10, and the rest are consistent with the example 38. The performance test results are as follows:

| **comparative example** | **(density/ g/m³)** | **thermal conductivity coefficient at room temperature/ W/(mk)** | **temperature resistance (temperature of cold surface)** | **compression rate** | **vibration powder-shedding rate/%** |
|---|---|---|---|---|---|
| comparative example 1 | 490 | 0.022 | 80°C | 1Mpa: 12%; 2Mpa: 23% | 4% |

### Comparative example 2

The comparative example 2 provides the thermal insulation material and its preparation method. The comparative example 2 is basically the same as in the example 41 in terms of the raw materials and the preparation method. The difference is that in the operation (2) in the thermal insulation material preparation process in the comparative example 2, the fiber direction is no longer changed by allowing the needle to repeatedly move up and down in the mold containing the mixed powders. The mixed powders obtained in the operation (1) are directly press-molded using the pressing device, and the rest are consistent with the example 41. The performance test results are as follows:

| **comparative example** | **(density/ g/m³)** | **thermal conductivity coefficient at room temperature/ W/(mk)** | **temperature resistance (temperature of cold surface)** | **compression rate** | **vibration powder-shedding rate/%** |
|---|---|---|---|---|---|
| comparative example 2 | 330 | 0.025 | 70°C | 1Mpa: 30%; | 7% |
| | | | | 2Mpa: 41% | |

The above descriptions are only some embodiments of the present disclosure, and are not intended to limit the protection scope of the present disclosure. Any equivalent structure or equivalent flow transformation made by using the contents and the accompanying drawings of the present disclosure, or directly or indirectly applied to other related technical fields, is included in the protection scope of the present disclosure.

## Claims

1. A thermal insulation material, comprising:
thermal insulation powders; and
reinforcing phase fibers, wherein the thermal insulation powders are loaded on surfaces of the reinforcing phase fibers; and in parts by mass, the thermal insulation powders range from 25 parts to 120 parts, and the reinforcing phase fibers range from 0.5 parts to 40 parts.

2. The thermal insulation material according to claim 1, wherein the thermal insulation powders are loaded on the surfaces of the reinforcing phase fibers through hydrogen bonding and/or electrostatic attraction.

3. The thermal insulation material according to claim 2, wherein content of hydroxyl groups on surfaces of the thermal insulation powders ranges from 1.4 groups/nm² to 2.5 groups/nm², and content of the hydroxyl groups on the surfaces of the reinforcing phase fibers ranges from 1 groups/nm² to 3 groups/nm².

4. The thermal insulation material according to claim 1, wherein the thermal insulation powders comprises a micron powder; the micron powder is one or more of a fumed silica micron powder, a fumed alumina micron powder, a zirconia micron powder, a titanium oxide micron powder, an iron oxide micron powder, a zirconia aerogel micron powder, a silica aerogel micron powder, an alumina aerogel micron powder, silica fume, white carbon black, diatomite, and fly ash; and a particle size of the micron powder ranges from 1µm to 100µm; and/or
the thermal insulation powders comprise a nano-powder; the nano-powder is one or more of a fumed silica nano-powder, a fumed alumina nano-powder, a zirconia nano-powder, a titanium oxide nano-powder, an iron oxide nano-powder, a zirconia aerogel nano-powder, a silica aerogel nano-powder, an alumina aerogel nano-powder; and a particle size of the nano-powder ranges from 5nm to 50nm.

5. The thermal insulation material according to claim 4, wherein the thermal insulation powders comprise the nano-powders, a plurality of the nano-powders are agglomerated to form a micron-sized aggregate with a porous structure, and nanoscale pores are defined in the aggregate.

6. The thermal insulation material according to claim 4, wherein the thermal insulation powders comprise the nano-powders and the micron powders; and in parts by mass, the nano-powders range from 25 parts to 90 parts, and the micron powders range from 0 parts to 30 parts.

7. The thermal insulation material according to claim 1, wherein the reinforcing phase fibers comprise one or more of glass fibers, alumina fibers, and alumina silicate fibers; and the reinforcing phase fibers have diameters from 1µm to 20µm and lengths from 4mm to 20mm.

8. The thermal insulation material according to any one of claims 1 to 7, wherein the thermal insulation material consists of the thermal insulation powders and the reinforcing phase fibers.

9. The thermal insulation material according to any one of claims 1 to 7, wherein
the thermal insulation material further comprises an infrared light-blocking agent; the infrared light-blocking agent is one or more of silicon carbide, titanium dioxide, zirconium oxide, and zinc oxide; or the infrared light-blocking agent is a potassium hexatitanate whisker or a silicon carbide whisker; and in parts by mass, the infrared light-blocking agent ranges from 0 parts to 60 parts; and/or
the thermal insulation material further comprises a getter; the getter is one or more of an activated carbon, a barium lithium alloy activator, calcium oxide, magnesium oxide, and a silica gel; and in parts by mass, the getter ranges from 0 parts to10 parts; and/or
the thermal insulation material further comprises a desiccant; the desiccant is one or more of anhydrous calcium chloride, alkali lime, quicklime, and solid sodium hydroxide; and in parts by mass, the desiccant ranges from 0 parts to 10 parts; and/or
the thermal insulation material further comprises a desiccant; the desiccant is one or more of anhydrous calcium chloride, alkali lime, quicklime, and solid sodium hydroxide; and in parts by mass, the desiccant ranges from 0 parts to 10 parts.

10. A method for making a thermal insulation material, configured for preparing the thermal insulation material according to any one of claims 1 to 9, and comprising:
weighing the thermal insulation powders and the reinforcing phase fibers, and placing the thermal insulation powders and the reinforcing phase fibers in a mixing device for dispersion and mixing, to obtain mixed powders; and
placing the mixed powders in a mold, and press-molding the mixed powders using a pressing device, to obtain the thermal insulation material.

11. The method for making the thermal insulation material according to claim 10, wherein the weighing the thermal insulation powders and the reinforcing phase fibers, and placing the thermal insulation powders and the reinforcing phase fibers in a mixing device for dispersion and mixing, to obtain mixed powders, further comprises:
loosening and crushing the reinforcing phase fibers.

12. The method for making the thermal insulation material according to claim 10, wherein the placing the mixed powders in a mold, and press-molding the mixed powders using a pressing device, to obtain the thermal insulation material, further comprises:
performing an exhausting operation; wherein the exhausting operation is performed before and during the press-molding, and the exhausting operation is performed through an exhaust plate with microporous or/and a mold with the microporous, and a pressure for the press-molding ranges from 0.5Mpa to 20Mpa, and a holding time ranges from 10s to 300s.

13. The method for making the thermal insulation material according to claim 10, wherein the weighing the thermal insulation powders and the reinforcing phase fibers, and placing the thermal insulation powders and the reinforcing phase fibers in a mixing device for dispersion and mixing, to obtain mixed powders, further comprises:
performing surface treatment on the thermal insulation powders; wherein the surface treatment comprises bonding an appropriate amount of solvent on surfaces of the thermal insulation powders through atomization; and the solvent is an alcohol solvent, and the alcohol solvent comprises ethanol, propanol, or butanol.

14. The method for making the thermal insulation material according to claim 10, wherein the weighing the thermal insulation powders and the reinforcing phase fibers, and placing the thermal insulation powders and the reinforcing phase fibers in a mixing device for dispersion and mixing, to obtain mixed powders, further comprises:
modifying the reinforcing phase fibers, so that functional groups configured for crosslinking with the thermal insulation powders are disposed on the surfaces of the reinforcing phase fibers.

15. A thermal insulation component, comprising:
a thermal insulation layer, comprising the thermal insulation material according to any one of claims 1 to 9; and
a structural layer, disposed on one or both sides of the thermal insulation layer.

16. The thermal insulation component according to claim 15, wherein the structural layer is a reinforcement layer, and the reinforcement layer is a hard reinforcement layer or a soft reinforcement layer; the hard reinforcement layer is one of a resin plate, a rubber sheet, glass, and a semi-cured sheet, and the soft reinforcement layer is non-woven fabric or high-silicon oxide fabric; or
the structural layer is a reflective layer or an encapsulation layer; the reflective layer is an aluminum foil, aluminum foil fabric, or a copper foil; and the encapsulation layer is one of a polyethylene terephthalate film, a polyimide film, a polyethylene film, a Polyether Ether Ketone film, a Polytetrafluoroethylene film, non-woven fabric, and high-silicon oxide fabric.

17. A thermal insulation product, configured for separating individual battery cells or for separating the individual battery cells from components other than the battery cells, and comprising:
the thermal insulation component according to claim 15 or 16; and
a connection component, configured to connect the thermal insulation component with the battery cells or the components other than the battery cells.

18. The thermal insulation product according to claim 17, wherein the connection component is a glue layer.

19. A battery, comprising:
at least one battery cell and/or at least one battery module and/or a battery housing; and
the thermal insulation product according to claim 17 or 18, wherein the thermal insulation product is disposed between adjacent battery cells and/or between the battery cell and the battery housing and/or between the battery cell and the battery module and/or between the battery modules and/or between the battery module and the battery housing.

20. An electrical device, comprising a battery according to claim 19.
